(19) Europäisches Patentamt
European Patent Office
Office européen des brevets

(11) EP 3 636 720 B1

(12) EUROPÄISCHE PATENTSCHRIFT

(45) Veröffentlichungstag und Bekanntmachung des Hinweises auf die Patenterteilung:
**07.04.2021 Patentblatt 2021/14**

(51) Int Cl.:
***C09J 5/00*** (2006.01) ***C09J 5/04*** (2006.01)

(21) Anmeldenummer: **19200440.6**

(22) Anmeldetag: **30.09.2019**

# (54) VERWENDUNG EINER VERDICKTEN ALKOHOLISCHEN ZUSAMMENSETZUNG ZUR VERTIKALEN, BLASENFREIEN VERKLEBUNG VON SUBSTRATEN SOWIE VERFAHREN ZUR VERTIKALEN FÜGUNG ZWEIER SUBSTRATE

USE OF A THICKENED ALCOHOLIC COMPOSITION FOR VERTICAL, BUBBLE-FREE ADHESION OF SUBSTRATES AND METHOD FOR VERTICALLY JOINING TWO SUBSTRATES

UTILISATION D'UNE COMPOSITION ALCOOLISÉE ÉPAISSIE DESTINÉE À L'ADHÉSION VERTICALE SANS BULLE D'AIR DES SUBSTRATS AINSI QUE PROCÉDÉ DE JOINTURE VERTICALE DE DEUX SUBSTRATS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.10.2018 DE 102018216865**

(43) Veröffentlichungstag der Anmeldung:
**15.04.2020 Patentblatt 2020/16**

(73) Patentinhaber: **tesa SE**
**22848 Norderstedt (DE)**

(72) Erfinder:
- **MICHEL, Uwe**
  **Suzhou, 215125 (CN)**
- **FACKELMEYER, Harald**
  **25451 Quickborn (DE)**
- **RÖHL, Michael**
  **25469 Halstenbek (DE)**
- **SCHMITZ-STAPELA, Daniel**
  **22529 Hamburg (DE)**
- **HÄNLE, Mark**
  **22397 Hamburg (DE)**

(74) Vertreter: **tesa SE**
**Hugo-Kirchberg-Straße 1**
**22848 Norderstedt (DE)**

(56) Entgegenhaltungen:
**WO-A1-2004/054727 DE-A1-102006 018 492**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 636 720 B1

## Beschreibung

Die vorliegende Erfindung betrifft die Verwendung einer verdickten alkoholischen Zusammensetzung mit einer Viskosität von 1000 bis 4000 Pa*s bei einer Scherrate von 0,001/s und 25 °C sowie einer Viskosität von 0,1 bis 0,3 Pa*s bei einer Scherrate von 1000/s und 25 °C zur Reduzierung von Lufteinschlüssen bei der vertikalen Verklebung zweier Fügeteile. Weiterhin betrifft die vorliegende Erfindung ein Verfahren zur vertikalen Verklebung zweier Fügeteile, wobei die erfindungsgemäß verwendete Zusammensetzung vor dem vertikalen Fügen des zweiten Fügeteils vollflächig auf die Haftklebemasse eines doppelseitigen Klebebands aufgebracht wird. Schließlich betrifft die vorliegende Erfindung ein Kit-of-parts, welches ein Fügeteil, ein Fügemittel sowie die zuvor angeführte Zusammensetzung enthält und mit welchem eine blasenfreie vertikale Fügung zweier Substrate möglich ist.

## Stand der Technik

Gängige Klebesysteme für die Verklebung zweier Substrate sind Flüssigkleber, doppelseitige Selbstklebebänder, insbesondere trägerfreie sogenannte Transferklebebänder, und Hotmeltklebefolien. Übliche Verklebungsprozesse laufen so ab, dass das Klebesystem zunächst auf ein erstes Substrat aufgebracht wird. Anschließend muss dieses Vorprodukt bestehend aus dem ersten Substrat und dem Klebesystem mit dem zweiten Substrat verklebt werden.

Der Einsatz von Flüssigklebern zur Fügung zweier Substrate ist mit Problemen der optischen Qualität sowie mit Problemen beim Verkleben, nämlich der Handhabbarkeit selbst, verbunden (Handling). So kann es bei ihrem Einsatz zu Blasenbildung oder Schrumpf kommen, was die optische Qualität stark verringert. Der bei Flüssigklebern erforderliche Härtungsvorgang verkompliziert und verlängert zudem den Verklebungsprozess.

Aus diesem Grund werden zur Fügung zweier Substrate häufig doppelseitig selbstklebende Produkte wie Transferklebebänder und doppelseitige Klebebänder verwendet. Diese zeichnen sich durch eine einfachere Handhabbarkeit und Prozessierbarkeit aus. Ihr hoher Nutzen in Anwendungsbereichen des verbindenden Klebens ergibt sich im Falle entsprechender Haftklebmassen aus deren Haftklebrigkeit und der Tatsache, dass die verwendeten Haftklebemassen nach der Applikation auf dem Substrat nicht aushärten müssen.

Diese Klebebänder können trägerlos oder auch mit wenigstens einem Trägermaterial ausgestaltet sein. Ist ein Trägermaterial vorhanden, kann dieses ein- oder vorzugsweise beidseitig mit einer Haftklebemasse versehen sein oder daraus bestehen. Das Trägermaterial umfasst alle flächigen Gebilde, beispielsweise in zwei Dimensionen ausgedehnte Folien oder Folienabschnitte, Bänder mit ausgedehnter Länge und begrenzter Breite, Bandabschnitte, Stanzlinge (beispielsweise in Form von Umrandungen oder Begrenzungen einer (opto-) elektronischen Anordnung), Mehrschichtanordnungen und dergleichen. Dabei sind für verschiedene Anwendungen unterschiedlichste Träger wie zum Beispiel Folien, Gewebe, Vliese und Papiere mit den Klebemassen kombinierbar.

Als Trägermaterial werden vorliegend bevorzugt Polymerfolien, Folienverbunde oder mit organischen und/oder anorganischen Schichten versehene Folien oder Folienverbunde eingesetzt. Derartige Folien/Folienverbunde können aus allen gängigen zur Folienherstellung verwendeten Kunststoffen bestehen, beispielhaft aber nicht einschränkend erwähnt seien: Polyethylen, Polypropylen - insbesondere das durch mono-oder biaxiale Streckung erzeugte orientierte Polypropylen (OPP), Cyclische Olefin Copolymere (COC), Polyvinylchlorid (PVC), Polyester - insbesondere Polyethylenterephthalat (PET) und Poylethylennaphtalat (PEN), Ethylenvinylalkohol (EVOH), Polyvinylidenchlorid (PVDC), Polyvinylidenfluorid (PVDF), Polyacrylnitril (PAN), Polycarbonat (PC), Polyamid (PA), Polyethersulfon (PES) oder Polyimid (PI).

Der Träger kann zudem mit organischen oder anorganischen Beschichtungen oder Schichten kombiniert sein. Dies kann durch übliche Verfahren wie zum Beispiel Lackieren, Drucken, Bedampfen, Sputtern, Co-Extrusion oder Lamination geschehen. Beispielhaft, aber nicht einschränkend erwähnt seien hier etwa Oxide oder Nitride des Siliziums und des Aluminiums, Indium-Zinn-Oxid (ITO) oder Sol-Gel-Beschichtungen.

Als Klebemasse ist in dem Klebeband mindestens eine Haftklebemasse vorhanden. Als Haftklebemassen werden Klebemassen bezeichnet, welche bereits unter relativ schwachem Andruck eine dauerhafte Verbindung mit dem Substrat erlauben und nach Gebrauch im Wesentlichen rückstandsfrei vom Substrat wieder abgelöst werden können. Haftklebemassen wirken bei Raumtemperatur permanent haftklebrig, weisen also eine hinreichend geringe Viskosität und eine hohe Anfassklebrigkeit auf, so dass sie die Oberfläche des jeweiligen Substrats bereits bei geringem Andruck benetzen. Die Verklebbarkeit der Haftklebemassen beruht auf ihren adhäsiven Eigenschaften und die Wiederablösbarkeit auf ihren kohäsiven Eigenschaften.

Als Beispiele für Haftklebemassen, aber ohne eine Einschränkung vornehmen zu wollen, seien als vorteilhaft im Sinne dieser Erfindung die folgenden genannt: Acrylat-, Silikon-, Naturkautschuk-, Synthesekautschuk-, Styrolblockcopolymermassen, mit einem Elastomerblock aus ungesättigten oder hydrierten Polydienblöcken (Polybutadien, Polyisopren, Copolymeren aus beiden sowie weitere, dem Fachmann geläufige Elastomerblöcke) sowie weitere, dem Fachmann geläufige Haftklebemassen, für die insbesondere silikonhaltige Trennbeschichtungen verwendet werden können. Wird im Rahmen dieser Schrift von Haftklebemassen auf Acrylatbasis gesprochen, so seien hiervon auch ohne explizite

Erwähnung Haftklebemassen auf Basis von Methacrylaten und auf Basis von Acrylaten und Methacrylaten umfasst, sofern nicht ausdrücklich anders beschreiben. Ebenfalls im Sinne der Erfindung sind Kombinationen und Blends mehrerer Basispolymere sowie mit Klebharzen, Füllstoffen, Alterungsschutzmitteln und Vernetzern additivierte Klebemassen, wobei die Aufzählung der Additive nur beispielhaft und nicht einschränkend zu verstehen ist.

Der Träger des Klebebands wird einseitig oder zweiseitig mit der Haftklebemasse aus Lösung oder Dispersion, 100 %ig (zum Beispiel Schmelze) oder durch Coextrusion beschichtet. Alternativ ist eine Beschichtung durch Transfer der Haftklebemassen-Schicht durch Kaschieren möglich. Die Haftklebeschicht(en) können durch Wärme oder energiereiche Strahlen vernetzt werden.

Zur Optimierung der Eigenschaften kann bevorzugt die zum Einsatz kommende Haftklebemasse mit einem oder mehreren Additiven wie Klebrigmachern (Harzen), Weichmachern, Füllstoffen, Pigmenten, UV-Absorbern, Lichtschutz-, Alterungsschutzmitteln, Vernetzungsmitteln, Vernetzungspromotoren oder Elastomeren abgemischt sein.

Die Menge der Haftklebemasse beträgt bevorzugt 10 bis 120 g/$m^2$, vorzugsweise 25 bis 100 g/$m^2$ (gemeint ist die Menge nach einer eventuell notwendigen Entfernung von Wasser oder Lösungsmittel; die Zahlenwerte entsprechen auch in etwa der Dicke in $\mu$m).

Vorteilhaft ist eine physikalische Vorbehandlung der mit Haftklebemasse zu beschichtenden Trägerseite zur Verbesserung der Haftung, beispielsweise durch Flamm-, Plasma- oder Coronabehandlung.

Bei Bedarf kann vor dem Aufbringen der Haftklebemasse auf dem Träger eine Primerschicht, insbesondere lösungsmittelfrei wie zum Beispiel durch Coextrusion, aufgebracht werden, so dass sich zwischen der Trägerschicht und einer Haftklebemasse eine Primerschicht befindet. Als Primer sind die bekannten Dispersion- und Lösungsmittelsysteme verwendbar, zum Beispiel auf Basis von isopren- oder butadienhaltigen Kautschuken und/oder Cyclokautschuken. Isocyanate oder Epoxyharze als Additive verbessern die Haftung und erhöhen zum Teil auch die Scherfestigkeit der Haftklebemasse. Physikalische Oberflächenbehandlungen wie Beflammung, Corona oder Plasma oder Coextrusionsschichten sind ebenfalls geeignet, die Haftung zu verbessern. Besonders bevorzugt ist die Nutzung vorgenannter Verfahren bei Verwendung lösungsmittelfreier Haftklebemasse, insbesondere solche auf Acrylatbasis. Beschreibungen der üblichen Primer finden sich zum Beispiel in "Handbook of Pressure Sensitive Adhesive Technology", D. Satas, (3. Auflage).

Klebebänder, welche ein- oder beidseitig mit Haftklebemasse beschichtet sind, werden am Ende des Herstellungsprozesses zumeist zu einer Rolle in Form einer archimedischen Spirale aufgewickelt. Um zu verhindern, dass die Haftklebemassen miteinander in Kontakt kommen können, werden die Klebebänder vor dem Wickeln auf ein Abdeckmaterial (auch als Trennmaterial bezeichnet) aufgebracht, welches zusammen mit dem Klebeband aufgewickelt wird. Dem Fachmann sind derartige Abdeckmaterialien unter den Namen Releaseliner oder Liner bekannt.

Der Liner (Trennpapier, Trennfolie) ist nicht Bestandteil eines Klebebandes, sondern nur ein Hilfsmittel zu dessen Herstellung, Lagerung oder für die Weiterverarbeitung durch Stanzen. Wird ein doppelseitig klebendes, mit einem Liner ausgerüstetes Klebeband abgerollt, wird es normalerweise mit der offenen, also linerfreien, Haftklebemassenseite auf einen Untergrund aufgeklebt. Die andere Haftklebemassenseite haftet währenddessen auf der beschichteten Oberfläche des Liners noch in genügendem Maße, um die Handhabung des Klebebands zu ermöglichen.

Ein Liner nach dem Stand der Technik besteht aus zumindest einer abhäsiven Schicht, auch als "Trennschicht" bezeichnet, um die Adhäsionsneigung von adhärierenden Produkten gegenüber diesen Oberflächen zu verringern (trennwirksame Funktion). Diese Schicht kann auf einem Trägermaterial aufgebracht sein. Als Trägermaterial des Liners können insbesondere Papiere oder Folien eingesetzt werden. Als Folien werden dabei bevorzugt solche aus biaxial verstrecktem Polyethylenterephthalat, Polybuten, Polypropylen, Polyethylen, monoaxial verstrecktem Polypropylen, biaxial verstrecktem Polypropylen oder Polyethylen verwendet, besonders vorzugsweise Polyolefinfolien (Polypropylen- und Polyethylenfolien) oder Polyesterfolien. Auch polymerbeschichtete Papiere oder Vliese sind anzutreffen.

Als Trennschicht eingesetzt werden können alle dem Fachmann bekannten Systeme, insbesondere solche, welche im "Handbook of Pressure Sensitive Adhesive Technology" von Donatas Satas (Satas & Associates, Warwick 1999) genannt sind. Das Material der abhäsiven Trennschicht ist nach dem Stand der Technik bevorzugt ausgewählt aus der Gruppe umfassend Silikone, fluorierte Silikone, Silikon-Copolymere, Wachse, Carbamate, Fluorpolymere, mit hydrophoben Seitenketten ausgestattete Poly- und Oligoacrylate, Polyolefine sowie Mischungen aus zwei oder mehr der genannten Stoffe.

Beim Fügen des zweiten Substrats nach Entfernung der Trennschicht des doppelseitigen Klebebands kommt es sehr häufig zum Einschluss von Luftblasen zwischen dem zweiten Substrat und der Fügeseite des Klebebands. Diese Blasen sind sowohl optisch als auch technisch von Nachteil für die Klebung und können auch durch Nachbehandlung wie Autoklavieren (Behandeln des Laminats mit erhöhtem Druck und erhöhter Temperatur) nicht mehr zu entfernt werden.

Um diese Luftblasen während der Fügung des zweiten Substrats zu reduzieren beziehungsweise zu vermeiden, ist es im Stand der Technik bekannt, die oben liegende Fügeseite der Haftklebemasse des Klebebands vollflächig mit einem Alkohol, beispielsweise Ethanol, zu benetzen.

Beim Fügen vertikal angeordneter Substrate läuft das vollflächig applizierte Ethanol jedoch ab und es kommt

beim Fügen des zweiten Substrats zum Einschluss von Blasen auf der Fügeseite der Haftklebemasse des Klebebands.

### Aufgabe der Erfindung

Die Aufgabe der vorliegenden Erfindung besteht demnach in der Verwendung einer Zusammensetzung, welche den Einschluss von Luftblasen während der vertikalen Fügung zweier Substrate minimiert beziehungsweise vermeidet. Eine weitere Aufgabe der vorliegenden Erfindung besteht in der Bereitstellung eines Verfahrens zum vertikalen Fügen zweier Substrate, bei welchem ein Einschluss von Luftblasen während der Fügung des zweiten Substrats minimiert beziehungsweise vermieden wird. Darüber hinaus besteht eine weitere Aufgabe der vorliegenden Erfindung in der Bereitstellung eines Kit-of-parts, mit welchem eine blasenfreie vertikale Fügung zweier Substrate möglich ist.

### Lösung der Aufgabe

Die Aufgabe wird gelöst durch die Verwendung einer Zusammensetzung, enthaltend

a) mindestens einen Alkohol und
b) mindestens ein Verdickungsmittel,

zur Reduzierung von Lufteinschlüssen bei der vertikalen Verklebung zweier Fügeteile, wobei die Zusammensetzung

- eine Viskosität von 1000 bis 4000 Pa*s bei einer Scherrate von 0,001/s und 25 °C und
- eine Viskosität von 0,1 bis 0,3 Pa*s bei einer Scherrate von 1000/s und 25 °C aufweist.

Weiterhin wird die Aufgabe gelöst durch ein Verfahren zur vertikalen Verklebung zweier Fügeteile, wobei das Verfahren die nachfolgenden Schritte in der angegebenen Reihenfolge umfasst:

a) Aufbringen einer ersten Haftklebemasse eines doppelseitigen Klebebands auf ein erstes Fügeteil,
b) Entfernen der Trennschicht des doppelseitigen Klebebands von der zweiten Haftklebemasse des Klebebands,
c) Vollflächiges Aufbringen einer erfindungsgemäß verwendeten Zusammensetzung auf die zweite Haftklebemasse des Klebebands,
d) Vertikales Fügen eines zweiten Fügeteils auf die mit der Zusammensetzung vollflächig

benetzte zweite Haftklebemasse des Klebebands.

Schließlich wird die Aufgabe gelöst durch ein Kit-of-parts, umfassend

a) mindestens ein Fügeteil
b) mindestens ein Fügemittel, wobei das Fügemittel beidseitig mit einer Haftklebemasse ausgestattet ist und
c) eine erfindungsgemäß verwendete Zusammensetzung,

wobei das Fügeteil a) und das Fügemittel b) separat vorliegen oder wobei das Fügemittel b) einseitig auf das Fügeteil a) aufgebracht ist.

Der Erfindung liegt die Erkenntnis zugrunde, dass lediglich bei Einsatz von alkoholischen verdickten Zusammensetzungen mit einer Viskosität von 1000 bis 4000 Pa*s bei einer Scherrate von 0,001/s und einer Viskosität von 0,1 bis 0,3 Pa*s bei einer Scherrate von 1000/s ein Ablaufen dieser verdickten Zusammensetzung nach der vollflächigen Applikation auf die Haftklebemasse des Klebebands vermieden und somit eine blasenfreie vertikale Fügung des zweiten Substrats ermöglicht wird. Zusammensetzungen, welche bei einer Scherrate von 1000/s eine Viskosität von weniger als 0,1 Pa*s aufweisen, erlauben hingegen keine genaue Positionierung der Substrate, da die Haftklebemasse des Klebebands von dem zu fügenden zweiten Substrat abrutscht. Liegt die Viskosität der eingesetzten Zusammensetzungen bei einer Scherrate von 0,001/s unter 400 Pa*s, so kommt es beim Aufstellen des ersten Substrats mit der mit der Zusammensetzung benetzten Haftklebemasse zu einem vollständigen Ablaufen dieser Zusammensetzung von der Haftklebemasse und somit zu einem Einschluss von Luftblasen bei der Fügung des zweiten Substrats.

### Detaillierte Beschreibung der Erfindung

Als erste zwingende Komponente enthält die erfindungsgemäß verwendete Zusammensetzung mindestens einen Alkohol a). Bevorzugt werden in der verwendeten Zusammensetzung bestimmte Alkohole eingesetzt. Gemäß einer bevorzugten Ausführungsform des ersten Erfindungsgegenstands ist der mindestens eine Alkohol a) ausgewählt aus linearen oder verzweigten $C_1$-$C_{10}$-Alkoholen, bevorzugt aus Ethanol, Propan-1-ol und Propan-2-ol, insbesondere

aus einer Mischung von Ethanol und Propan-2-ol. Der Einsatz einer Mischung aus Ethanol und Propan-2-ol hat sich im Hinblick auf die Reduzierung von Lufteinschlüssen während des vertikalen Fügens zweier Substrate als besonders vorteilhaft erwiesen.

Es ist erfindungsgemäß bevorzugt, wenn die verwendete Zusammensetzung den mindestens einen Alkohol in einer bestimmten Gesamtmenge enthält. Vorzugsweise enthält die Zusammensetzung daher den mindestens einen Alkohol a) in einer Gesamtmenge von 30 bis 80 Gew.-%, vorzugsweise von 40 bis 75 Gew.-%, bevorzugt von 45 bis 70 Gew.-%, insbesondere von 50 bis 60 Gew.-%, jeweils bezogen auf das Gesamtgewicht der Zusammensetzung. Wird eine Mischung an verschiedenen Alkoholen eingesetzt, so beziehen sich die zuvor genannten Mengenangaben auf die Mischung an Alkoholen. Besonders bevorzugt wird im Rahmen der vorliegenden Erfindung eine Mischung aus Ethanol und Propan-2-ol in einer Gesamtmenge von 50 bis 60 Gew.-%, bezogen auf das Gesamtgewicht der Zusammensetzung, verwendet.

Gemäß einer besonders bevorzugten Ausführungsform des ersten Erfindungsgegenstands enthält die verwendete Zusammensetzung eine Mischung aus Ethanol und Propan-2-ol in bestimmten Mengenbereichen. Es ist daher erfindungsgemäß besonders bevorzugt, wenn die Zusammensetzung Ethanol in einer Gesamtmenge von 40 Gew.-% und Propan-2-ol in einer Gesamtmenge von 19 bis 20 Gew.-%, jeweils bezogen auf das Gesamtgewicht der Zusammensetzung, enthält. Die Verwendung der Mischung aus Ethanol und Propan-2-ol in den zuvor angeführten Gesamtmengen resultiert in einer besonders hohen Reduzierung von Lufteinschlüssen während des vertikalen Fügens zweier Substrate.

Als zweite zwingende Komponente enthält die erfindungsgemäß verwendete Zusammensetzung mindestens ein Verdickungsmittel b). Bevorzugt werden in der verwendeten Zusammensetzung bestimmte Verdickungsmittel eingesetzt. Gemäß einer bevorzugten Ausführungsform des ersten Erfindungsgegenstands ist das Verdickungsmittel b) ausgewählt aus der Gruppe von (i) linearen oder vernetzten Homopolymeren von (Meth)acrylsäure und (Meth)acrylaten, (ii) linearen oder vernetzten Copolymeren von (Meth)acrylsäure und (Meth)acrylaten, (iii) Poly(2-acrylamido-2-methylpropan-sulfonsäure), (iv) Poly(ammonium-2-acrylamido-2-methylpropansulfonat), (v) Cellulosegummi, (vi) Hydroxyethylcellulose und Hydroxypropylcellulose, (vii) Chitosan, sowie (viii) deren Mischungen, insbesondere ausgewählt aus vernetzten Copolymeren von (Meth)acrylsäure und $C_{10}$-$C_{30}$-(Meth)alkylacrylaten. Unter dem Begriff (Meth)acrylat ist hierbei sowohl Acrylsäure als auch Methacrylsäure zu verstehen. Weiterhin sind unter dem Begriff $C_{10}$-$C_{30}$-(Meth)alkylacrylat sowohl $C_{10}$-$C_{30}$-Alkylester der Acrylsäure als auch der Methacrylsäure zu verstehen. Der Einsatz von vernetzten Copolymeren von (Meth)acrylsäure und $C_{10}$-$C_{30}$-(Meth)alkylacrylaten führt zu einer ausreichenden Verdickung der verwendeten alkoholischen Zusammensetzungen. Hierdurch wird ein Herablaufen dieser Zusammensetzung während des vertikalen Fügens zweier Bauteile vermieden.

Es kann erfindungsgemäß vorgesehen sein, dass die verwendete Zusammensetzung zusätzlich mindestens ein Neutralisationsmittel c) enthält. Bevorzugt ist das mindestens eine Neutralisationsmittel c), ausgewählt aus der Gruppe von (i) anorganischen Basen, insbesondere Natriumhydroxid und Kaliumhydroxid, (ii) Monoaminen, insbesondere Triethanolamin, Aminopropylmethan, Diisopropanolamin, Triisopropanolamin und 2-Amino-2-(Hydroxymethyl)-1,3-propandiol, (iii) Diaminen, insbesondere Tetrahydroxypropylethylendiamin, (iv) ethoxylierten Aminen, insbesondere ethoxyliertem Cocosamin mit 15 EO-Einheiten pro Molekül Cocosamin, sowie (v) deren Mischungen. Durch Zusatz eines Neutralisationsmittels c) zu dem Verdickungsmittel b) kann die Viskosität der verwendeten Zusammensetzung derart eingestellt werden, dass die erforderliche Viskosität von 1000 bis 4000 Pa*s bei einer Scherrate von 0,001/s und 25 °C und von 0,1 bis 0,3 Pa*s bei einer Scherrate von 1000/s und 25 °C erreicht wird.

Anstelle eines Neutralisationsmittels c) kann die verwendete Zusammensetzung auch zusätzlich mindestens ein Co-Verdickungsmittel d) enthalten. Wird also ein Co-Verdickungsmittel d) eingesetzt, so enthält die verwendete Zusammensetzung 0 Gew.-%, bezogen auf das Gesamtgewicht der Zusammensetzung, an Neutralisationsmitteln, insbesondere an den zuvor beschriebenen Neutralisationsmitteln c). Der Einsatz einer Kombination aus mindestens einem Verdickungsmittel b), insbesondere von vernetzten Copolymeren von (Meth)acrylsäure und $C_{10}$-$C_{30}$-(Meth)alkylacrylaten mit mindestens einem Co-Verdickungsmitteln d) hat sich im Rahmen der vorliegenden Erfindung als besonders vorteilhaft im Hinblick auf die erforderlichen Viskositäten erwiesen. Eine besonders bevorzugte Ausführungsform des ersten Erfindungsgegenstands ist daher dadurch gekennzeichnet, dass die Zusammensetzung zusätzlich mindestens ein Co-Verdickungsmittel d) enthält, wobei das Co-Verdickungsmittel d) ausgewählt ist aus Aminoxiden der allgemeinen Formel (I)

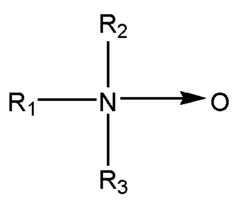

(I)

worin
$R_1$ bis $R_3$, jeweils unabhängig voneinander, für einen aliphatischen Alkyl-, Isoalkyl- oder Alkylenrest, einen alicylischen tertiären Alkyl- oder Amidoalkylrest mit jeweils 1 bis 22 Kohlenstoffatomen oder eine Oxalkylengruppe der Formel $-(C_nH_{2n}O)_xH$ mit n = 2 oder 3 und x = 1 bis 25, stehen.

Aminoxide der allgemeinen Formel (I) sind beispielsweise Tris(hydroxyethyl)-aminoxid, Dimethylhydroxyethylaminoxid, Diemethyl-2-hydroxypropyl-aminoxid sowie Methylmorpholinaminoxid. Im Rahmen der vorliegenden Erfindung bevorzugt eingesetzte Aminoxide der Formel (I) sind beispielsweise Dimethyl-($C_6$-$C_{14}$-alkyl)-aminoxid, Trioctylaminoxid sowie ($C_8$-$C_{22}$-Alkyl)-aminoxide mit 5 bis 15 Ethylen- und/oder Propylenoxideinheiten ($R_1$ = $C_8$-$C_{22}$-Alkyl, $R_2$ und $R_3$, jeweils unabhängig voneinander, $-(C_nH_{2n}O)_xH$ mit n = 2 oder 3 und x = 5 bis 15). Der Einsatz der zuvor genannten Co-Verdickungsmittel d) in Kombination mit dem bevorzugten Verdickungsmittel b) in Form von vernetzten Copolymeren von (Meth)acrylsäure und $C_{10}$-$C_{30}$-(Meth)alkylacrylaten führt selbst bei Einsatz von 50 bis 60 Gew.-% Alkohol, insbesondere Ethanol und Propan-2-ol, zu einer stabilen Verdickung der Zusammensetzung mit den zuvor genannten erforderlichen Viskositäten.

In diesem Zusammenhang ist es erfindungsgemäß bevorzugt, wenn die Zusammensetzung ein Gewichtsverhältnis der Gesamtmenge an Verdickungsmittel b) zu der Gesamtmenge an Co-Verdickungsmittel d) von 1 : 1 bis 1 : 3 enthält. Der Einsatz derartiger Gewichtsverhältnisse hat sich als besonders vorteilhaft im Hinblick auf die Erreichung der erforderlichen Viskositäten erwiesen.

Um ein Abrutschen des zweiten Bauteils während des Fügens zu verhindern, ist es erfindungsgemäß vorteilhaft, wenn die Zusammensetzung die Verdickungsmittel in einer bestimmten Gesamtmenge enthält. Bevorzugt enthält die erfindungsgemäß verwendete Zusammensetzung das Verdickungsmittel b) und gegebenenfalls das Co-Verdickungsmittel d) in einer Gesamtmenge von 0,5 bis 5 Gew.-%, insbesondere von 0,5 bis 2,5 Gew.-%, jeweils bezogen auf das Gesamtgewicht der Zusammensetzung. Der Einsatz der zuvor angeführten Gesamtmengen erlaubt eine stabile Verdickung der Zusammensetzung selbst bei hohen Alkoholgehalten sowie die Erreichung der erforderlichen Viskositäten.

Bei der erfindungsgemäß verwendeten Zusammensetzung handelt es sich bevorzugt um eine wässrige Zusammensetzung. Daher ist es im Rahmen der vorliegenden Erfindung vorteilhaft, wenn die Zusammensetzung Wasser in einer Gesamtmenge von 0 bis 70 Gew.-%, insbesondere von 10 bis 45 Gew.-%, jeweils bezogen auf das Gesamtgewicht der Zusammensetzung, enthält. Um ein Abrutschen des zweiten Bauteils oder ein Herablaufen der Zusammensetzung während des vertikalen Fügens zu vermeiden, muss die verwendete Zusammensetzung bei einer Scherrate von 1000/s und 25 °C eine Viskosität von 0,1 bis 0,3 Pa*s aufweisen. Bevorzugt ist es jedoch, wenn die Zusammensetzung eine Viskosität von 0,2 Pa*s bei einer Scherrate von 1000/s und 25 °C aufweist. Der Einsatz derartiger Zusammensetzungen führt zu einer besonders guten Reduzierung von Lufteinschlüssen während des vertikalen Fügens zweier Substrate.

Eine im Rahmen des ersten Erfindungsgegenstands besonders bevorzugt verwendete Zusammensetzung Z1 enthält - bezogen auf das Gesamtgewicht der Zusammensetzung:

- 30 bis 80 Gew.-%, vorzugsweise von 40 bis 75 Gew.-%, bevorzugt von 45 bis 70 Gew.-%, insbesondere von 50 bis 60 Gew.-% Ethanol und Propan-2-ol,
- mindestens ein vernetztes Copolymer von (Meth)acrylsäure und $C_{10}$-$C_{30}$-(Meth)alkylacrylaten,
- mindestens ein Co-Verdickungsmittel d) der allgemeinen Formel (I).

Eine weitere im Rahmen des ersten Erfindungsgegenstands besonders bevorzugt verwendete Zusammensetzung Z2 enthält - bezogen auf das Gesamtgewicht der Zusammensetzung:

- 40 Gew.-% Ethanol und 19 bis 20 Gew.-% Propan-2-ol,
- mindestens ein vernetztes Copolymer von (Meth)acrylsäure und $C_{10}$-$C_{30}$-(Meth)alkylacrylaten
- mindestens ein Co-Verdickungsmittel d) der allgemeinen Formel (I), worin $R_1$ für eine $C_8$-$C_{22}$-Alkylgruppe und $R_2$ und $R_3$, jeweils unabhängig voneinander, für eine Gruppe - $(C_nH_{2n}O)_xH$ mit n = 2 oder 3 und x = 5 bis 15 stehen.

Eine weitere im Rahmen des ersten Erfindungsgegenstands besonders bevorzugt verwendete Zusammensetzung Z3 enthält - bezogen auf das Gesamtgewicht der Zusammensetzung:

- 40 Gew.-% Ethanol und 19 bis 20 Gew.-% Propan-2-ol,
- mindestens ein vernetztes Copolymer von (Meth)acrylsäure und $C_{10}$-$C_{30}$-(Meth)alkylacrylaten b)
- mindestens ein Co-Verdickungsmittel d) der allgemeinen Formel (I), worin $R_1$ für eine $C_8$-$C_{22}$-Alkylgruppe und $R_2$ und $R_3$, jeweils unabhängig voneinander, für eine Gruppe - $(C_nH_{2n}O)_xH$ mit n = 2 oder 3 und x = 5 bis 15 stehen,

wobei die Gesamtmenge an vernetztem Copolymer b) und Co-Verdickungsmittel d) 0,5 bis 5 Gew.-%, insbesondere von 0,5 bis 2,5 Gew.-%, beträgt.

Bevorzugt sind die beiden Fügeteile, unabhängig voneinander, ausgewählt aus Glas, Holz, Kunststoff, Metallen, beschichteten Metallen, Panelen, Versteifungsprofilen, Beton sowie Putz. Besonders bevorzugt handelt es sich bei einem Fügeteil um eine Glasplatte und bei dem zweiten Fügeteil um ein Rahmenelement aus Aluminium oder Kunststoff. Die Fügung kann hierbei auf dem Rahmenelement oder in dem Rahmenelement erfolgen.

Ein weiterer Gegenstand der vorliegenden Erfindung ist ein Verfahren zur vertikalen Verklebung zweier Fügeteile, wobei das Verfahren die nachfolgenden Schritte in der angegebenen Reihenfolge umfasst:

a) Aufbringen einer ersten Haftklebemasse eines doppelseitigen Klebebands auf ein erstes Fügeteil,
b) Entfernen der Trennschicht des doppelseitigen Klebebands von der zweiten Haftklebemasse des Klebebands,
c) Vollflächiges Aufbringen einer erfindungsgemäß verwendeten Zusammensetzung auf die zweite Haftklebemasse des Klebebands,
d) Vertikales Fügen eines zweiten Fügeteils auf die mit der Zusammensetzung vollflächig benetzte zweite Haftklebemasse des Klebebands.

In Verfahrensschritt a) wird ein doppelseitiges Klebeband verwendet, welches trägerlos oder auch mit wenigstens einem Trägermaterial ausgestaltet sein kann. Ist ein Trägermaterial vorhanden, kann dieses ein- oder vorzugsweise beidseitig mit der Haftklebemasse versehen sein oder daraus bestehen. Das Trägermaterial umfasst alle flächigen Gebilde, beispielsweise in zwei Dimensionen ausgedehnte Folien oder Folienabschnitte, Bänder mit ausgedehnter Länge und begrenzter Breite, Bandabschnitte, Stanzlinge (beispielsweise in Form von Umrandungen oder Begrenzungen einer (opto-)elektronischen Anordnung), Mehrschichtanordnungen und dergleichen. Dabei sind für verschiedene Anwendungen unterschiedlichste Träger wie zum Beispiel Folien, Gewebe, Vliese und Papiere mit den Klebemassen kombinierbar.

Als Trägermaterial können alle flächigen Gebilde, beispielsweise in zwei Dimensionen ausgedehnte Folien oder Folienabschnitte, Bänder mit ausgedehnter Länge und begrenzter Breite, Bandabschnitte, Stanzlinge (beispielsweise in Form von Umrandungen oder Begrenzungen einer (opto-)elektronischen Anordnung), Mehrschichtanordnungen und dergleichen verwendet werden. Dabei sind für verschiedene Anwendungen unterschiedlichste Träger wie zum Beispiel Folien, Gewebe, Vliese und Papiere mit verschiedenen Klebstoffen kombinierbar.

Als Trägermaterial des Schichtverbunds werden vorliegend bevorzugt Polymerfolien, Folienverbunde oder mit organischen und/oder anorganischen Schichten versehene Folien oder Folienverbunde eingesetzt. Derartige Folien/Folienverbunde können aus allen gängigen zur Folienherstellung verwendeten Kunststoffen bestehen, beispielhaft aber nicht einschränkend erwähnt seien: Polyethylen, Polypropylen - insbesondere das durch mono-oder biaxiale Streckung erzeugte orientierte Polypropylen (OPP), Cyclische Olefin Copolymere (COC), Polyvinylchlorid (PVC), Polyester - insbesondere Polyethylenterephthalat (PET) und Poylethylennaphtalat (PEN), Ethylenvinylalkohol (EVOH), Polyvinylidenchlorid (PVDC), Polyvinylidenfluorid (PVDF), Polyacrylnitril (PAN), Polycarbonat (PC), Polyamid (PA), Polyethersulfon (PES) oder Polyimid (PI).

Der Träger kann zudem mit organischen oder anorganischen Beschichtungen oder Schichten kombiniert sein. Dies kann durch übliche Verfahren wie zum Beispiel Lackieren, Drucken, Bedampfen, Sputtern, Co-Extrusion oder Lamination geschehen. Beispielhaft, aber nicht einschränkend erwähnt seien hier etwa Oxide oder Nitride des Siliziums und des Aluminiums, Indium-Zinn-Oxid (ITO) oder Sol-Gel-Beschichtungen.

Bei dem Träger kann es sich zudem um eine Trägerschicht handeln, welche nachfolgend auch als Hartphase bezeichnet wird. Die Polymerbasis der Hartphase ist bevorzugt ausgewählt aus der Gruppe bestehend aus Polyvinylchloriden (PVC), Polyethylenterephthalaten (PET), Polyurethanen, Polyolefinen, Polybutylenterephthalaten (PBT), Polycarbonaten, Polymethylmethacrylaten (PMMA), Polyvinylbutyralen (PVB), Ionomeren und Mischungen aus zwei oder mehreren der vorstehend aufgeführten Polymere. Besonders bevorzugt ist die Polymerbasis der Hartphase ausgewählt aus der Gruppe bestehend aus Polyvinylchloriden, Polyethylenterephthalaten, Polyurethanen, Polyolefinen und Mischungen aus zwei oder mehreren der vorstehend aufgeführten Polymere. Die Hartphase ist im Wesentlichen eine Polymerfolie, deren Polymerbasis aus den vorstehenden Materialien ausgewählt ist. Unter einer "Polymerfolie" wird eine dünne, flächige, flexible, aufwickelbare Bahn verstanden, deren Materialbasis im Wesentlichen von einem oder mehreren Polymer(en) gebildet wird.

Unter "Polyurethanen" werden in weitgefasstem Sinne polymere Substanzen verstanden, in denen sich wiederholende Einheiten durch Urethan-Gruppierungen -NH-CO-O- miteinander verknüpft sind.

Unter "Polyolefinen" werden Polymere verstanden, die stoffmengenbezogen zu mindestens 50 % Wiederholungseinheiten der allgemeinen Struktur $-[-CH_2-CR^1R^2-]_n-$ enthalten, worin $R^1$ für ein Wasserstoffatom und $R^2$ für ein Wasserstoffatom oder für eine lineare oder verzweigte, gesättigte aliphatische oder cycloaliphatische Gruppe steht. Soweit die Polymerbasis der Hartphase Polyolefine umfasst, handelt es sich bei diesen besonders bevorzugt um Polyethylene, insbesondere um Polyethylene mit ultrahoher Molmasse (UHMWPE).

Unter der "Polymerbasis" wird das Polymer beziehungsweise werden die Polymere verstanden, das/die den größten Gewichtsanteil aller in der betreffenden Schicht beziehungsweise Phase enthaltenen Polymere ausmacht/ausmachen.

Die Dicke der Hartphase beträgt insbesondere ≤ 150 μm. Bevorzugt beträgt die Dicke der Hartphase 10 bis 150 μm, besonders bevorzugt 30 bis 120 μm und insbesondere 50 bis 100 μm, beispielsweise 70 bis 85 μm. Unter der "Dicke" wird die Ausdehnung der betreffenden Schicht beziehungsweise Phase entlang der z-Ordinate eines gedachten Koordinatensystems verstanden, bei dem die durch die Maschinenrichtung und die Querrichtung zur Maschinenrichtung aufgespannte Ebene die x-y-Ebene bildet. Die Dicke wird durch Messung an mindestens fünf verschiedenen Stellen der betreffenden Schicht beziehungsweise Phase und anschließende Bildung des arithmetischen Mittels aus den erhaltenen Messergebnissen ermittelt. Die Dickenmessung der Hartphase erfolgt dabei in Einklang mit DIN EN ISO 4593.

Als Klebemasse beziehungsweise Weichphase sind zwei Haftklebemassen vorhanden, wobei eine Haftklebemasse mit einem Releaseliner abgedeckt ist, um ein Verkleben der beiden Haftklebemassen beim Aufrollen auf eine Rolle zu verhindern. Als Liner können alle dem Fachmann bekannten Systeme, insbesondere solche, welche im "Handbook of Pressure Sensitive Adhesive Technology" von Donatas Satas (Satas & Associates, Warwick 1999) genannt sind, verwendet werden. Das Material des Liners ist nach dem Stand der Technik bevorzugt ausgewählt aus der Gruppe umfassend Silikone, fluorierte Silikone, Silikon-Copolymere, Wachse, Carbamate, Fluorpolymere, mit hydrophoben Seitenketten ausgestattete Poly- und Oligoacrylate, Polyolefine sowie Mischungen aus zwei oder mehr der genannten Stoffe. Besonders bevorzugte Liner sind im Rahmen der vorliegenden Erfindung ausgewählt aus der Gruppe der Polyolefine.

Als Klebemasse können im Rahmen der vorliegenden Erfindung Acrylat-, Silikon-, Naturkautschuk-, Synthesekautschuk-, Styrolblockcopolymermassen, mit einem Elastomerblock aus ungesättigten oder hydrierten Polydienblöcken (Polybutadien, Polyisopren, Copolymeren aus beiden sowie weitere, dem Fachmann geläufige Elastomerblöcke) sowie weitere, dem Fachmann geläufige Haftklebemassen verwendet werden. Besonders bevorzugt ist eine der beiden Klebemassen ein Polymerschaum, eine viskoelastische Masse und/oder eine elastomere Masse. Dessen Polymerbasis ist bevorzugt ausgewählt aus Polyolefinen, Polymethacrylaten, Polyurethanen und Mischungen aus zwei oder mehreren der vorstehend aufgeführten Polymere. Unter einem "Polymerschaum" wird ein Gebilde aus gasgefüllten kugel- oder polyederförmigen Zellen verstanden, welche durch flüssige, halbflüssige, hochviskose oder feste Zellstege begrenzt werden; ferner ist der Hauptbestandteil der Zellstege ein Polymer oder ein Gemisch mehrerer Polymere.

Unter einer "viskoelastischen Masse" wird ein Material verstanden, das neben Merkmalen der reinen Elastizität (Zurückkehren in den Ausgangszustand nach äußerer mechanischer Einwirkung) auch Merkmale einer viskosen Flüssigkeit zeigt, beispielsweise das Auftraten innerer Reibung bei Deformation. Insbesondere werden Haftklebemassen auf Polymerbasis als viskoelastische Massen angesehen.

Unter einer "elastomeren Masse" wird ein Material verstanden, das gummielastisches Verhalten aufweist und bei 20 °C wiederholt auf mindestens das Zweifache seiner Länge gedehnt werden kann und nach Aufhebung des für die Dehnung erforderlichen Zwanges sofort wieder annähernd seine Ausgangsdimension einnimmt.

Unter "Polyacrylaten" werden Polymere verstanden, deren stoffmengenbezogene Monomerbasis zu mindestens 50%, insbesondere zu mindestens 60%, aus Acrylsäure, Methacrylsäure, Acrylsäureestern und/oder Methacrylsäureestern besteht, wobei Acrylsäureester und/oder Methacrylsäureester zumindest anteilig generell und bevorzugt zu mindestens 50% enthalten sind. Insbesondere wird unter einem "Polyacrylat" ein Polymerisat verstanden, welches durch radikalische Polymerisation von Acryl- und/oder Methylacrylmonomeren sowie gegebenenfalls weiteren, copolymerisierbaren Monomeren erhältlich ist.

Besonders bevorzugt ist die Polymerbasis der Weichphase ausgewählt aus Polyolefinen, Polyacrylaten und Mischungen aus zwei oder mehreren der vorstehend aufgeführten Polymere. Sofern Polyolefine zu der Polymerbasis der Weichphase gehören, sind diese bevorzugt ausgewählt aus Polyethylenen, Ethylen-Vinylacetat-Copolymeren (EVA) und Gemischen aus Polyethylenen und Ethylen-Vinylacetat-Copolymeren (PE/EVA-Blends). Die Polyethylene können dabei verschiedene Polyethylen-Typen sein, beispielsweise HDPE, LDPE, LLDPE, Blends aus diesen Polyethylen-Typen und/oder Gemische davon.

Die Weichphase kann einen Schaum und jeweils eine ober- und unterhalb der geschäumten Schicht angeordnete Haftklebeschicht umfassen, wobei die Polymerbasis des Schaums aus einem oder mehreren Polyolefin(en) besteht und die Polymerbasis der Haftklebeschichten aus einem oder mehreren Polyacrylat(en) besteht. Besonders bevorzugt besteht die Polymerbasis des Schaums dabei aus einem oder mehreren Polyethylen(en), Ethylen-Vinylacetat-Copolymer(en) und Gemischen aus einem oder mehreren Polyethylen(en) und/oder Ethylen-Vinylacetat-Copolymer(en). Ganz besonders bevorzugt besteht die Polymerbasis des Schaums dabei aus einem oder mehreren Polyethylen(en).

Der Polyolefin-basierte Schaum selbst ist nicht oder nur sehr wenig haftklebrig. Der Verbund mit der Hartphase beziehungsweise dem Substrat wird daher vorteilhaft durch die Haftklebeschichten bewirkt. Die Schäumung des Polyolefin-basierten Ausgangsmaterials des Schaums wird bevorzugt durch zugesetztes Treibgas im Sinne einer physikalischen Schäumung und/oder durch ein chemisches Schäumungsmittel, beispielsweise durch Azodicarbonsäurediamin, hervorgerufen.

Weiterhin kann die Weichphase einen haftklebrigen Polymerschaum umfassen, dessen Polymerbasis aus einem oder mehreren Polyacrylaten besteht. "Haftklebriger Schaum" bedeutet, dass der Schaum selbst eine Haftklebemasse ist und somit ein Auftrag einer zusätzlichen Haftklebeschicht nicht erforderlich ist. Dies ist vorteilhaft, weil im Herstellungsprozess weniger Schichten zusammengefügt werden müssen und das Risiko von Ablösungserscheinungen und anderen unerwünschten Phänomenen an den Schichtgrenzen sinkt.

Selbstklebemassen, auch Haftklebemassen genannt, sind insbesondere solche polymeren Massen, die - gegebenenfalls durch geeignete Additivierung mit weiteren Komponenten wie beispielsweise Klebharzen - bei der Anwendungstemperatur (sofern nicht anders definiert, bei Raumtemperatur) dauerhaft klebrig und klebfähig sind und an einer Vielzahl von Oberflächen bei Kontakt anhaften, insbesondere sofort anhaften (einen sogenannten "Tack" [Klebrigkeit oder Anfassklebrigkeit] aufweisen). Sie sind in der Lage, bereits bei der Anwendungstemperatur ohne eine Aktivierung durch Lösemittel oder durch Wärme - üblicherweise aber durch den Einfluss eines mehr oder weniger hohen Druckes - ein zu verklebendes Substrat hinreichend zu benetzen, damit sich zwischen der Masse und dem Substrat für die Haftung hinreichende Wechselwirkungen ausbilden können. Hierfür wesentliche Einflussparameter sind unter anderem der Druck sowie die Kontaktzeit. Die besonderen Eigenschaften der Haftklebemassen gehen unter anderem insbesondere auf deren viskoelastische Eigenschaften zurück. So können beispielsweise schwach oder stark anhaftende Klebemassen hergestellt werden; weiterhin solche, die nur einmalig und permanent verklebbar sind, so dass die Verklebung ohne Zerstörung des Klebemittels und/oder der Substrate nicht gelöst werden können, oder solche, die leicht wiederablösbar und gegebenenfalls mehrfach verklebbar sind.

Haftklebemassen können grundsätzlich auf Grundlage von Polymeren unterschiedlicher chemischer Natur hergestellt werden. Die haftklebenden Eigenschaften werden unter anderem durch die Art und die Mengenverhältnisse der eingesetzten Monomere bei der Polymerisation der der Haftklebemasse zugrunde liegenden Polymere, deren mittlere Molmasse und Molmassenverteilung sowie durch Art und Menge der Zusatzstoffe der Haftklebemasse wie Klebharze, Weichmacher und dergleichen beeinflusst.

Zur Erzielung der viskoelastischen Eigenschaften werden die Monomere, auf denen die der Haftklebemasse zugrunde liegenden Polymere basieren, sowie die gegebenenfalls vorhandenen weiteren Komponenten der Haftklebemasse insbesondere derart gewählt, dass die Haftklebemasse eine Glasübergangstemperatur (nach DIN 53765) unterhalb der Anwendungstemperatur (also üblicherweise unterhalb der Raumtemperatur) aufweisen.

Durch geeignete kohäsionssteigernde Maßnahmen, wie beispielsweise Vernetzungreaktionen (Ausbildung brückenbildender Verknüpfungen zwischen den Makromolekülen), kann der Temperaturbereich, in dem eine Polymermasse haftklebrige Eigenschaften aufweist, vergrößert und/oder verschoben werden. Der Anwendungsbereich der Haftklebemassen kann somit durch eine Einstellung zwischen Fließfähigkeit und Kohäsion der Masse optimiert werden.

Eine Haftklebemasse wirkt bei Raumtemperatur permanent haftklebrig, weist also eine hinreichend geringe Viskosität und eine hohe Anfassklebrigkeit auf, so dass sie die Oberfläche des jeweiligen Klebegrunds bereits bei geringem Andruck benetzt. Die Verklebbarkeit der Klebemasse beruht auf ihren adhäsiven Eigenschaften und die Wiederablösbarkeit auf ihren kohäsiven Eigenschaften.

Acrylathaftklebemassen sind typischerweise radikalisch polymerisierte Copolymere aus Acrylsäurealkylestern oder Methacrylsäurealkylestern von $C_1$- bis $C_{20}$-Alkoholen wie zum Beispiel Methylacrylat, Ethyl(meth)acrylat, n-Butyl(meth)acrylat, t-Butyl(meth)acrylat, Cyclohexyl(meth)acrylat, 2-Ethylhexyl(meth)acrylat, n-Octyl(meth)acrylat, iso-Octyl(meth)acrylat, n-Decyl(meth)acrylat, n-Dodecyl(meth)acrylat, Tetradecyl(meth)acrylat, Lauryl(meth)acrylat, Oleyl(meth)acrylat, Palmityl(meth)acrylat und Stearyl(meth)acrylat neben weiteren (Meth)acrylsäureestern wie Isobornyl(meth)acrylat, Benzyl(meth)acrylat, Phenyl(meth)acrylat und 2-Bromoethyl(meth)acrylat, Alkoxyalkyl(meth)acrylate wie Ethoxyethyl(meth)acrylat. Weiterhin fallen darunter Ester von ethylenisch ungesättigten Di- und Tricarbonsäuren und Anhydriden wie Ethylmaleat, Dimethylfumarat und Ethylmethylitaconat. Ebenfalls fallen vinylaromatische Monomere wie zum Beispiel Styrol, Vinyltoluol, Methylstyrol, n Butylstyrol, Decylstyrol darunter.

Weitere mögliche Monomere zur Erzielung der vorteilhaften Eigenschaften sind Vinylester aus bis zu 20 Kohlenstoffatomen enthaltenden Carbonsäuren wie Vinylacetat oder Vinyllaurat, Vinylether aus bis zu 10 Kohlenstoffatomen enthaltenden Alkoholen wie Vinylmethylether oder Vinylisobutylether, Vinylhalogenide wie Vinylchlorid oder Vinylidendichlorid, Nitrile wie Acrylnitril oder Methacrylnitril, Säureamide wie Acrylamid oder Methacrylamid und ungesättigte Kohlenwasserstoffe mit 2 bis 8 Kohlenstoffatomen wie Ethylen, Propen, Butadien, Isopren, 1-Hexen oder 1-Octen.

Zur Beeinflussung der physikalischen und optischen Eigenschaften der Haftklebemasse kommen mehrfunktionale ethylenisch ungesättigte Monomere als Vernetzermonomere in Frage. Beispiele hierzu sind Divinylbenzol, Alkyldiacrylate wie 1,2-Ethylenglykoldiacrylat, 1,4-Butandioldiacrylat, 1,6 Hexandioldiacrylat, 1,8-Octandioldiacrylat oder 1,12-Dodecandioldiacrylat, Triacrylate wie Trimethylolpropantriacrylat und Tetraacrylate wie Pentaerythritoltetraacrylat. Unter die Gruppe der mehrfunktionellen Monomere fallen auch UV-vernetzbare Monomere, wie zum Beispiel mit (Meth)acrylat-funktionalisierte Derivate des Benzophenons oder des Benzoins.

Eine weitere Gruppe von Monomeren sind solche, die ein latentes Vernetzungspotential im Polymer erzeugen und nach dem Eintrocknen der Klebemasse spontan (häufig katalysiert) zu einem Netzwerkaufbau führen. Ein solches Monomer ist zum Beispiel Glycidymethyacrylat, dessen Oxiranring mit Hydroxyl- oder insbesondere Carboxylatfunktionen unter Ringöffnung zu einer kovalenten Bindung führt. Diese Reaktion findet beschleunigt in Gegenwart von Zinkionen oder, besonders in Anwesenheit von Carboxylfunktionen, Aminen statt.

Zur Erzielung haftklebriger Eigenschaften muss die Verarbeitungstemperatur der Klebmasse oberhalb ihrer Glasübergangstemperatur sein, um viskoelastische Eigenschaften zu haben.

Weiterhin lassen sich aktivierbare Klebmassen auf Acrylatbasis einsetzen. Die aktivierbaren Klebmassen enthalten bevorzugt ein Basispolymer a), umfassend:

a1) 40 bis 89 Gew.-% Acrylsäureester und/oder Methacrylsäureester mit der folgenden Formel $CH_2 = CH(R_4)(COOR_5)$, wobei $R_4$ = H oder $CH_3$ und $R_5$ = H und/oder Alkylketten mit 1 bis 30 C-Atomen sind,

a2) 5 bis 30 Gew.-% eines copolymerisierbaren Vinylmonomers mit zumindest einer Carbonsäure und/oder Sulfonsäure- und/oder Phosphonsäuregruppe,

a3) 1 bis 10 Gew.-% eines copolymerisierbaren Vinylmonomers mit zumindest einer Epoxygruppe oder einer Säureanhydridfunktion,

a4) 0 bis 20 Gew.-% eines copolymerisierbaren Vinylmonomers, welches mit der funktionellen Gruppe zur Kohäsionssteigerung, der Erhöhung der Reaktivität der Vernetzung, oder zur direkten Vernetzung beitragen kann, sowie

5 bis 50 Gew.-% eines Epoxy-Harzes oder einer Mischung aus mehreren Epoxy-Harzen b).

Das Polymer a) kann eine aktivierbare Haftklebemasse umfassen, die unter Temperatureinwirkung und optionalen Druck haftklebrig wird und nach der Verklebung und Abkühlen durch die Verfestigung eine hohe Klebkraft aufbaut. Je nach Anwendungstemperatur weisen diese aktivierbaren Haftklebemassen unterschiedliche statische Glasübergangstemperaturen $T_{G,A}$ oder Schmelzpunkte $T_{S,A}$ auf.

Besonders bevorzugt werden für die Monomere a1) Acrylmomonere eingesetzt, die Acryl- und Methacrylsäureester mit Alkylgruppen bestehend aus 4 bis 14 C-Atomen, bevorzugt 4 bis 9 C-Atomen umfassen. Spezifische Beispiele, ohne sich durch diese Aufzählung einschränken zu wollen, sind n-Butylacrylat, n-Pentylacrylat, n-Hexylacrylat, n-Heptylacrylat, n-Octylacrylat, n-Nonylacrylat, Laurylacrylat, Stearylacrylat, Behenylacrylat, und deren verzweigten Isomere wie zum Beispiel 2-Ethylhexylacrylat. Weitere einzusetzende Verbindungsklassen, die ebenfalls in geringen Mengen unter a1) hinzugesetzt werden können sind Methylmethacrylate, Cyclohexylmethacrylate, Isobornylacrylat und Isobornylmethacrylate.

Bevorzugt werden als Monomere a2) Itaconsäure, Acrylsäure, Methacrylsäure, Vinylessigsäure, Fumarsäure, Crotonsäure, Aconitsäure, Dimethylacrylsäure, $\beta$-Acryloyloxypropionsäure, Trichloracrylsäure, Vinylphosphonsäureund Vinylsulfonsäure eingesetzt.

Als Monomere a3) werden bevorzugt Glycidylmethacrylat, Maleinsäureanhydrid und Itaconsäureanhydrid eingesetzt.

Besonders bevorzugt werden für die Monomere a4) Vinylester, Vinylether, Vinylhalogenide, Vinylidenhalogenide, Vinylverbindungen mit aromatischen Cyclen und Heterocyclen in $\alpha$-Stellung eingesetzt. Auch hier seien nicht ausschließlich einige Beispiele genannt: Vinylacetat, Vinylformamid, Vinylpyridin, Ethylvinylether, Vinylchlorid, Vinylidenchlorid und Acrylonitril. In einer weiteren sehr bevorzugten Auslegung für die Monomere a4) Monomere mit folgenden funktionellen Gruppen eingesetzt: Hydroxy-, Säureamid-, Isocyanato- oder Aminogruppen. Weitere besonders bevorzugte Beispiele für die Komponente a4) sind Hydroxyethylacrylat, Hydroxypropylacrylat, Hydroxyethylmethacrylat, Hydroxypropylmethacrylat, Allylalkohol, Acrylamid, Benzylacrylat, Benzylmethacrylat, Phenylacrylat, Phenylmethacrylat, t-Butylphenylacrylat, t-Butylaphenylmethacrylat, Phenoxyethylacrlylat, Phenoxyethylmethacrylat, 2-Butoxyethylmethacrylat, 2-Butoxyethylacrylat, Dimethylaminoethylmethacrylat, Dimethylaminoethylacrylat, Diethylaminoethylmethacrylat, Diethylaminoethylacrylat, Cyanoethylmethacrylat, Cyanoethylacrylat, 6-Hydroxyhexylmethacrylat, N-tert.-Butylacrylamid, N-Methylolmethacrylamid, N-(Buthoxymethyl)methacrylamid, N-Methylolacrylamid, N-(Ethoxymethyl)acrylamid, N-Isopropylacrylamid und Tetrahydrofurfurylacrlyat. Weiterhin werden für die Komponente a4) bevorzugt aromatische Vinylverbindungen eingesetzt, wobei die aromatischen Kerne vorzugsweise aus $C_4$ bis $C_{18}$ bestehen und auch Heteroatome enthalten können. Besonders bevorzugte Beispiele sind Styrol, 4-Vinylpyridin, N-Vinylphthalimid, Methylstyrol, 3,4-Dimethoxystyrol, 4-Vinylbenzoesäure, wobei diese Aufzählung nicht abschließend ist.

Zur Polymerisation werden die Monomere dermaßen gewählt, dass die resultierenden Polymere als industriell verwendbare Klebemassen oder Haftklebemassen eingesetzt werden können, insbesondere derart, dass die resultierenden Polymere klebende oder haftklebende Eigenschaften entsprechend des "Handbook of Pressure Sensitive Adhesive Technology" von Donatas Satas (van Nostrand, New York 1989) besitzen. Auch hier kann die Steuerung der gewünschten Glasübergangstemperatur durch die Anwendung der ***Fox***-Gleichung (G1) bei der Zusammenstellung der Monomermischung, welche der Polymerisation zugrunde liegt, erzielt werden. Für Haftklebemassen liegt die statische Glasübergangstemperatur des resultierenden Polymers vorteilhaft unterhalb 15 °C.

Zur Erzielung einer Glasübergangstemperatur $T_{G,A}$ der Polymere von $T_{G,A} \geq 30$ °C für Hitzeaktivierbare Klebemasse werden entsprechend dem vorstehend gesagten die Monomere sehr bevorzugt derart ausgesucht und die mengenmäßige Zusammensetzung der Monomermischung vorteilhaft derart gewählt, dass sich nach der ***Fox***-Gleichung (G1) (vgl. T.G. Fox, Bull. Am. Phys. Soc. 1 (1956) 123) der gewünschte $T_{G,A}$-Wert für das Polymer ergibt.

$$\frac{1}{T_G} = \sum_n \frac{w_n}{T_{G,n}} \qquad (G1)$$

Hierin repräsentiert n die Laufzahl über die eingesetzten Monomere, $w_n$ den Massenanteil des jeweiligen Monomers n (Gew.-%) und $T_{G,n}$ die jeweilige Glasübergangstemperatur des Polymers aus den jeweiligen Monomeren n in K.

Zur Herstellung der Klebemassen werden vorteilhaft konventionelle radikalische Polymerisationen oder kontrollierte radikalische Polymerisationen durchgeführt. Für die radikalisch verlaufenden Polymerisationen werden bevorzugt Initiatorsysteme eingesetzt, die zusätzlich weitere radikalische Initiatoren zur Polymerisation enthalten, insbesondere thermisch zerfallende radikalbildende Azo- oder Peroxo-Initiatoren. Prinzipiell eignen sich jedoch alle für Acrylate dem Fachmann geläufigen, üblichen Initiatoren. Die Produktion von C-zentrierten Radikalen ist im Houben Weyl, Methoden der Organischen Chemie, Vol. E 19a, Seiten 60 bis 147 beschrieben. Diese Methoden werden in bevorzugter Weise in Analogie angewendet.

Beispiele für Radikalquellen sind Peroxide, Hydroperoxide und Azoverbindungen, als einige nicht ausschließliche Beispiele für typische Radikalinitiatoren seien hier genannt Kaliumperoxodisulfat, Dibenzoylperoxid, Cumolhydroperoxid, Cyclohexanonperoxid, Di-t-butylperoxid, Azodiisosäurebutyronitril, Cyclohexylsulfonylacetylperoxid, Diisopropyl-percarbonat, t-Butylperoktoat, Benzpinacol. In einer sehr bevorzugten Auslegung wird als radikalischer Initiator 1,1'-Azo-bis-(cyclohexancarbonsäurenitril) (Vazo 88™ der Firma DuPont) verwendet.

Die mittleren Molekulargewichte $M_n$ der bei der radikalischen Polymerisation entstehenden Haftklebemassen werden sehr bevorzugt derart gewählt, dass sie in einem Bereich von 20.000 bis 2.000.000 g/mol liegen; speziell für die weitere Verwendung als Schmelzhaftkleber werden Haftklebemassen mit mittleren Molekulargewichten $M_n$ von 100.000 bis 500.000 g/mol hergestellt. Die Angaben der zahlenmittleren Molmasse $M_n$ und der gewichtsmittleren Molmasse $M_w$ in dieser Schrift beziehen sich auf die Bestimmung per Gelpermeationschromatographie (GPC). Die Bestimmung erfolgt an 100 $\mu$l klarfiltrierter Probe (Probenkonzentration 4 g/l). Als Eluent wird Tetrahydrofuran mit 0,1 Vol.-% Trifluoressigsäure eingesetzt. Die Messung erfolgt bei 25 °C. Als Vorsäule wird eine Säule Typ PSS-SDV, 5 $\mu$m, $10^3$ Å, 8,0 mm * 50 mm (Angaben hier und im Folgenden in der Reihenfolge: Typ, Partikelgrösse, Porosität, Innendurchmesser * Länge; 1 Å = $10^{-10}$ m) verwendet. Zur Auftrennung wird eine Kombination der Säulen des Typs PSS-SDV, 5 $\mu$m, $10^3$ Ä sowie $10^5$ Å und $10^6$ Å mit jeweils 8,0 mm * 300 mm eingesetzt (Säulen der Firma Polymer Standards Service; Detektion mittels Differentialrefraktometer Shodex RI71). Die Durchflussmenge beträgt 1,0 ml pro Minute. Die Kalibrierung erfolgt bei Polyacrylaten gegen PMMA-Standards (Polymethylmethacrylat-Kalibrierung) und sonst (Harze, Elastomere) gegen PS-Standards (Polystyrol-Kalibrierung).

Die Polymerisation kann in Substanz, in Gegenwart eines oder mehrerer organischer Lösungsmittel, in Gegenwart von Wasser oder in Gemischen aus organischen Lösungsmitteln und Wasser durchgeführt werden. Es wird dabei angestrebt, die verwendete Lösungsmittelmenge so gering wie möglich zu halten.

Die Polymerisationszeit beträgt -je nach Umsatz und Temperatur - zwischen 4 und 72 Stunden. Je höher die Reaktionstemperatur gewählt werden kann, das heißt, je höher die thermische Stabilität des Reaktionsgemisches ist, desto geringer kann die Reaktionsdauer gewählt werden.

Zudem kann die Haftklebemasse auf Acrylatbasis ein Poly(meth)acrylat beziehungsweise Poly(meth)acrylate enthalten. Erfindungsgemäß ist das Poly(meth)acrylat beziehungsweise sind die Poly(meth)acrylate zu 30 bis 65 Gew.-%, bezogen auf das Gesamtgewicht der Haftklebemasse, enthalten. Bevorzugt enthält die erfindungsgemäße Haftklebemasse 35 bis 55 Gew.-%, bezogen auf das Gesamtgewicht der Haftklebemasse, mindestens eines Poly(meth)acrylats.

Die Glasübergangstemperatur der erfindungsgemäß einsetzbaren Poly(meth)acrylate beträgt bevorzugt < 0 °C, stärker bevorzugt zwischen -20 und -50 °C. Die Glasübergangstemperatur von Polymeren oder Polymerblöcken in Blockcopolymeren wird im Rahmen dieser Erfindung mittels dynamischer Scanning Kalorimetrie (DSC) bestimmt. Dazu werden ca. 5 mg einer unbehandelten Polymerprobe in ein Aluminiumtiegelchen (Volumen 25 $\mu$L) eingewogen und mit einem gelochten Deckel verschlossen. Zur Messung wird ein DSC 204 F1 der Firma Netzsch verwendet. Es wird zwecks Inertisierung unter Stickstoff gearbeitet. Die Probe wird zunächst auf-150 °C abgekühlt, dann mit einer Heizrate von 10 K/min bis +150 °C aufgeheizt und erneut auf-150 °C abgekühlt. Die sich anschließende zweite Heizkurve wird erneut bei 10 K/min gefahren und die Änderung der Wärmekapazität aufgenommen. Glasübergänge werden als Stufen im Thermogramm erkannt.

Die Glasübergangstemperatur wird folgendermaßen ausgewertet (siehe Figur 1):
An die Basislinie des Thermogramms vor ① und nach ② der Stufe wird jeweils eine Tangente angelegt. Im Bereich der Stufe wird eine Ausgleichsgerade ⑤ parallel zur Ordinate so gelegt, dass sie die beiden Tangenten schneidet, und zwar so, dass zwei Flächen ③ und ④ (zwischen der jeweils einen Tangente, der Ausgleichsgeraden und der Messkurve) gleichen Inhalts entstehen. Der Schnittpunkt der so positionierten Ausgleichsgeraden mit der Messkurve ergibt die Glasübergangstemperatur.

Vorzugsweise sind die Poly(meth)acrylate der erfindungsgemäßen Haftklebemasse erhältlich durch zumindest

anteiliges Einpolymerisieren von funktionellen, bevorzugt mit Epoxidgruppen vernetzungsfähigen Monomeren. Besonders bevorzugt handelt es sich dabei um Monomere mit Säuregruppen (besonders Carbonsäure-, Sulfonsäure oder Phosphonsäuregruppen) und/oder Hydroxygruppen und/oder Säureanhydridgruppen und/oder Epoxidgruppen und/oder Amingruppen; insbesondere bevorzugt sind carbonsäuregruppenhaltige Monomere. Es ist ganz besonders vorteilhaft, wenn das Polyacrylat einpolymerisierte Acrylsäure und/oder Methacrylsäure aufweist. All diese Gruppen weisen eine Vernetzungsfähigkeit mit Epoxidgruppen auf, wodurch das Polyacrylat vorteilhaft einer thermischen Vernetzung mit eingebrachten Epoxiden zugänglich wird.

Weitere Monomere, die als Comonomere für die Poly(meth)acrylate verwendet werden können, sind neben Acrylsäure- und/oder Methacrylsäureestern mit bis zu 30 C-Atomen pro Molekül beispielsweise Vinylester von bis zu 20 C-Atome enthaltenden Carbonsäuren, Vinylaromaten mit bis zu 20 C-Atomen, ethylenisch ungesättigte Nitrile, Vinylhalogenide, Vinylether von 1 bis 10 C-Atome enthaltenden Alkoholen, aliphatische Kohlenwasserstoffe mit 2 bis 8 C-Atomen und einer oder zwei Doppelbindungen oder Mischungen dieser Monomere.

Die Eigenschaften des betreffenden Poly(meth)acrylats lassen sich insbesondere über eine Variation der Glasübergangstemperatur des Polymers durch unterschiedliche Gewichtsanteile der einzelnen Monomere beeinflussen. Das beziehungsweise die Poly(meth)acrylat(e) der Erfindung können vorzugsweise auf die folgende Monomerzusammensetzung zurückgeführt werden:

a) Acrylsäureester und/oder Methacrylsäureester der folgenden Formel $CH_2 = C(R^I)(COOR^{II})$
wobei $R^I$ = H oder $CH_3$ und $R^{II}$ ein Alkylrest mit 4 bis 14 C-Atomen ist,
b) olefinisch ungesättigte Monomere mit funktionellen Gruppen der für eine Reaktivität mit Epoxidgruppen bereits definierten Art,
c) optional weitere Acrylate und/oder Methacrylate und/oder olefinisch ungesättigte Monomere, die mit der Komponente (a) copolymerisierbar sind.

Die Anteile der entsprechenden Komponenten (a), (b), und (c) werden bevorzugt derart gewählt, dass das Polymerisationsprodukt eine Glasübergangstemperatur von < 0 °C, stärker bevorzugt zwischen -20 und -50 °C (DSC) aufweist. Es ist besonders vorteilhaft, die Monomere der Komponente (a) mit einem Anteil von 45 bis 99 Gew.-%, die Monomere der Komponente (b) mit einem Anteil von 1 bis 15 Gew.-% und die Monomere der Komponente (c) mit einem Anteil von 0 bis 40 Gew.-% zu wählen (die Angaben sind bezogen auf die Monomermischung für das "Basispolymer", also ohne Zusätze eventueller Additive zu dem fertigen Polymer, wie Harze etc.).

Die Monomere der Komponente (a) sind insbesondere weichmachende und/oder unpolare Monomere. Vorzugsweise werden als Monomere (a) Acryl- und Methacrylsäureester mit Alkylgruppen bestehend aus 4 bis 14 C-Atomen, besonders bevorzugt 4 bis 9 C-Atomen, eingesetzt. Beispiele für derartige Monomere sind n-Butylacrylat, n-Butylmethacrylat, n-Pentylacrylat, n-Pentylmethacrylat, n-Amylacrylat, n-Hexylacrylat, n-Hexylmethacrylat, n-Heptylacrylat, n-Octylacrylat, n-Octylmethacrylat, n-Nonylacrylat und deren verzweigte Isomere, wie zum Beispiel Isobutylacrylat, Isooctylacrylat, Isooctylmethacrylat, 2-Ethylhexylacrylat oder 2-Ethylhexylmethacrylat.

Die Monomere der Komponente (b) sind insbesondere olefinisch ungesättigte Monomere mit funktionellen Gruppen, insbesondere mit funktionellen Gruppen, die eine Reaktion mit Epoxidgruppen eingehen können.

Bevorzugt werden für die Komponente (b) Monomere mit funktionellen Gruppen eingesetzt, die ausgewählt sind aus der Gruppe umfassend: Hydroxy-, Carboxy-, Sulfonsäure- oder Phosphonsäuregruppen, Säureanhydride, Epoxide, Amine.

Besonders bevorzugte Beispiele für Monomere der Komponente (b) sind Acrylsäure, Methacrylsäure, Itaconsäure, Maleinsäure, Fumarsäure, Crotonsäure, Aconitsäure, Dimethylacrylsäure, β-Acryloyloxypropionsäure, Trichloracrylsäure, Vinylessigsäure, Vinylphosphonsäure, Maleinsäureanhydrid, Hydroxyethylacrylat, insbesondere 2-Hydroxyethylacrylat, Hydroxypropylacrylat, insbesondere 3-Hydroxypropylacrylat, Hydroxybutylacrylat, insbesondere 4-Hydroxybutylacrylat, Hydroxyhexylacrylat, insbesondere 6-Hydroxyhexylacrylat, Hydroxyethylmethacrylat, insbesondere 2-Hydroxyethylmethacrylat, Hydroxypropylmethacrylat, insbesondere 3-Hydroxypropylmethacrylat, Hydroxybutylmethacrylat, insbesondere 4-Hydroxybutylmethacrylat, Hydroxyhexylmethacrylat, insbesondere 6-Hydroxyhexylmethacrylat, Allylalkohol, Glycidylacrylat, Glycidylmethacrylat.

Prinzipiell können als Komponente (c) alle vinylisch funktionalisierten Verbindungen eingesetzt werden, die mit der Komponente (a) und/oder der Komponente (b) copolymerisierbar sind. Die Monomere der Komponente (c) können zur Einstellung der Eigenschaften der resultierenden Haftklebemasse dienen. Beispielhafte Monomere der Komponente (c) sind:

Methylacrylat, Ethylacrylat, Propylacrylat, Methylmethacrylat, Ethylmethacrylat, Benzylacrylat, Benzylmethacrylat, *sec*-Butylacrylat, *tert*-Butylacrylat, Phenylacrylat, Phenylmethacrylat, Isobornylacrylat, Isobornylmethacrylat, *tert*-Butylphenylacrylat, *tert*-Butylaphenylmethacrylat, Dodecylmethacrylat, Isodecylacrylat, Laurylacrylat, n-Undecylacrylat, Stearylacrylat, Tridecylacrylat, Behenylacrylat, Cyclohexylmethacrylat, Cyclopentylmethacrylat, Phenoxyethylacrlylat, Phenoxyethylmethacrylat, 2-Butoxyethylmethacrylat, 2-Butoxyethylacrylat, 3,3,5-Trimethylcyclohexylacrylat, 3,5-Dimethyladamantylacrylat, 4-Cumylphenylmethacrylat, Cyanoethylacrylat, Cyanoethylmethacrylat, 4-Biphenylacrylat, 4-Biphenylmethacrylat, 2-Naphthylacrylat, 2-Naphthylmethacrylat, Tetrahydrofufurylacrylat, Diethylaminoethylacrylat, Diethylaminoethylmethacrylat, Dimethylaminoethyl-acrylat, Dimethylaminoethylmethacrylat, 2-Butoxyethylacrylat, 2-Butoxyethylmethacrylat, 3-Methoxyacrylsäuremethylester, 3-Methoxybutylacrylat, Phenoxyethylacrlylat, Phenoxyethylmethacrylat, 2-Phenoxyethylmethacrylat, Butyldiglykolmethacrylat, Ethylenglycolacrylat, Ethylenglycolmonomethylacrylat, Methoxy Polyethylenglykolmethacrylat 350, Methoxy Polyethylenglykolmethacrylat 500, Propylenglycolmonomethacrylat, Butoxydiethylenglykolmethacrylat, Ethoxytriethylenglykolmethacrylat, Octafluoropentylacrylat, Octafluoropentylmethacrylat, 2,2,2-Trifluoroethylmethacrylat, 1,1,1,3,3,3-Hexafluoroisopropylacrylat, 1,1,1,3,3,3-Hexafluoroisopropylmethacrylat, 2,2,3,3,3-Pentafluoropropylmethacrylat, 2,2,3,4,4,4-Hexafluorobutylmethacrylat, 2,2,3,3,4,4,4-Heptafluorobutylacrylat, 2,2,3,3,4,4,4-Heptafluorobutylmethacrylat, 2,2,3,3,4,4,5,5,6,6,7,7,8,8,8-Pentadecafluorooctylmethacrylat, Dimethylaminopropylacrylamid, Dimethylaminopropylmethacrylamid, *N*-(1-Methyl-undecyl)acrylamid, *N*-(n-Butoxymethyl)acrylamid, *N*-(Butoxymethyl)methacrylamid, *N*-(Ethoxymethyl)acrylamid, *N*-(n-Octadecyl)acrylamid, weiterhin *N*,*N*-Dialkyl-substituierte Amide, wie beispielsweise *N*,*N*-Dimethylacrylamid, *N*,*N*-Dimethylmethacrylamid, *N*-Benzylacrylamide, *N*-Isopropylacrylamid, *N*-*tert*-Butylacrylamid, *N*-*tert*-Octylacrylamid, *N*-Methylolacrylamid, *N*-Methylolmethacrylamid, Acrylnitril, Methacrylnitril, Vinylether, wie Vinylmethylether, Ethylvinylether, Vinylisobutylether, Vinylester, wie Vinylacetat, Vinylchlorid, Vinylhalogenide, Vinylidenchlorid, Vinylidenhalogenide, Vinylpyridin, 4-Vinylpyridin, *N*-Vinylphthalimid, *N*-Vinyllactam, *N*-Vinylpyrrolidon, Styrol, α- und p-Methylstyrol, α-Butylstyrol, 4-n-Butylstyrol, 4-n-Decylstyrol, 3,4-Dimethoxystyrol, Makromonomere wie 2-Polystyrolethylmethacrylat (gewichtsmittleres Molekulargewicht $M_w$, bestimmt mittels GPC, von 4000 bis 13000 g/mol), Poly(methylmethacrylat)ethylmethacrylat ($M_w$ von 2000 bis 8000 g/mol).

Monomere der Komponente (c) können vorteilhaft auch derart gewählt werden, dass sie funktionelle Gruppen enthalten, die eine nachfolgende strahlenchemische Vernetzung (beispielsweise durch Elektronenstrahlen, UV) unterstützen. Geeignete copolymerisierbare Photoinitiatoren sind zum Beispiel Benzoinacrylat und acrylatfunktionalisierte Benzophenonderivate. Monomere, die eine Vernetzung durch Elektronenbestrahlung unterstützen, sind zum Beispiel Tetrahydrofurfurylacrylat, N-*tert*-Butylacrylamid und Allylacrylat.

Die Herstellung der Polyacrylate ("Polyacrylate" wird im Rahmen der Erfindung als synonym mit "Poly(meth)acrylate" verstanden) kann nach dem Fachmann geläufigen Verfahren geschehen, insbesondere vorteilhaft durch konventionelle radikalische Polymerisationen oder kontrollierte radikalische Polymerisationen. Die Polyacrylate können durch Copolymerisation der monomeren Komponenten unter Verwendung der üblichen Polymerisationsinitiatoren sowie gegebenenfalls von Reglern hergestellt werden, wobei bei den üblichen Temperaturen in Substanz, in Emulsion, zum Beispiel in Wasser oder flüssigen Kohlenwasserstoffen, oder in Lösung polymerisiert wird.

Vorzugsweise werden die Polyacrylate durch Polymerisation der Monomere in Lösungsmitteln, insbesondere in Lösungsmitteln mit einem Siedebereich von 50 bis 150 °C, bevorzugt von 60 bis 120 °C unter Verwendung der üblichen Mengen an Polymerisationsinitiatoren, die im allgemeinen bei 0,01 bis 5, insbesondere bei 0,1 bis 2 Gew.-%, bezogen auf das Gesamtgewicht der Monomeren, liegen, hergestellt.

Prinzipiell eignen sich alle dem Fachmann geläufigen, üblichen Initiatoren. Beispiele für Radikalquellen sind Peroxide, Hydroperoxide und Azoverbindungen, zum Beispiel Dibenzoylperoxid, Cumolhydroperoxid, Cyclohexanonperoxid, Di-*t*-butylperoxid, Cyclohexylsulfonylacetylperoxid, Diisopropylpercarbonat, *t*-Butylperoktoat, Benzpinacol. In einer sehr bevorzugten Vorgehensweise wird als radikalischer Initiator 2,2'-Azobis(2-methylbutyronitril) (Vazo® 67™ der Firma DuPont) oder 2,2'-Azobis(2-methylpropionitril) (2,2'-Azobisisobutyronitril; AIBN; Vazo® 64™ der Firma DuPont) verwendet.

Als Lösungsmittel für die Herstellung der Poly(meth)acrylate kommen Alkohole wie Methanol, Ethanol, n- und iso-Propanol, n- und iso-Butanol, vorzugsweise Isopropanol und/oder Isobutanol, sowie Kohlenwasserstoffe wie Toluol und insbesondere Benzine eines Siedebereichs von 60 bis 120 °C in Frage. Ferner können Ketone wie vorzugsweise Aceton, Methylethylketon, Methylisobutylketon und Ester wie Essigsäureethylester sowie Gemische von Lösungsmitteln der genannten Art eingesetzt werden, wobei Gemische, die Isopropanol, insbesondere in Mengen von 2 bis 15 Gew.-%, bevorzugt 3 bis 10 Gew.-%, bezogen auf das eingesetzte Lösungsmittelgemisch, enthalten, vorgezogen werden.

Bevorzugt erfolgt nach der Herstellung (Polymerisation) der Polyacrylate eine Aufkonzentration, und die weitere Verarbeitung der Polyacrylate erfolgt im Wesentlichen lösemittelfrei. Die Aufkonzentration des Polymerisats kann in Abwesenheit von Vernetzer- und Beschleunigersubstanzen geschehen. Es ist aber auch möglich, eine dieser Verbindungsklassen dem Polymerisat bereits vor der Aufkonzentration zuzusetzen, so dass die Aufkonzentration dann in Gegenwart dieser Substanz(en) erfolgt.

Die gewichtsmittleren Molekulargewichte $M_W$ der Polyacrylate liegen bevorzugt in einem Bereich von 20.000 bis 2.000.000 g/mol; sehr bevorzugt in einem Bereich von 100.000 bis 1.500.000 g/mol, äußerst bevorzugt in einem Bereich von 150.000 bis 1.000.000 g/mol (die Angaben des mittleren Molekulargewichtes $M_W$ und der Polydisperisität PD in dieser Schrift beziehen sich auf die Bestimmung per Gelpermeationschromatographie. Als Eluent wurde THF mit 0,1 Vol.-% Trifluoressigsäure eingesetzt. Die Messung erfolgte bei 25 °C. Als Vorsäule wurde PSS-SDV, 5 μm, $10^3$ Å, ID 8,0 mm x 50 mm verwendet. Zur Auftrennung wurden die Säulen PSS-SDV, 5 μm, $10^3$ Å, $10^5$ Å und $10^6$ Å mit jeweils

ID 8,0 mm x 300 mm eingesetzt. Die Probenkonzentration betrug 4 g/l, die Durchflussmenge 1,0 ml pro Minute. Es wurde gegen PMMA-Standards gemessen. Das gewichtsmittlere Molekulargewicht $M_w$ wird dabei mittels Gelpermeationschromatographie (GPC) bestimmt. Als Eluent wird THF mit 0,1 Vol.-% Trifluoressigsäure eingesetzt. Die Messung erfolgt bei 25 °C. Als Vorsäule wird PSS-SDV, 5 μ, $10^3$ Å, ID 8,0 mm x 50 mm verwendet. Zur Auftrennung werden die Säulen PSS-SDV, 5 μ, $10^3$ Å sowie $10^5$ Å und $10^6$ Å mit jeweils ID 8,0 mm x 300 mm eingesetzt. Die Probenkonzentration beträgt 4 g/l, die Durchflussmenge 1,0 ml pro Minute. Es wird gegen PMMA Standards gemessen. (μ = μm; 1 Å = $10^{-10}$ m).). Dazu kann es vorteilhaft sein, die Polymerisation in Gegenwart geeigneter Polymerisationsregler wie Thiole, Halogenverbindungen und/oder Alkohole durchzuführen, um das gewünschte mittlere Molekulargewicht einzustellen.

Die Polyacrylate haben vorzugsweise einen K-Wert von 30 bis 90, besonders bevorzugt von 40 bis 70, gemessen in Toluol (1%ige Lösung, 21 °C). Der K-Wert nach Fikentscher ist ein Maß für das Molekulargewicht und die Viskosität des Polymerisats. Das Prinzip der Methode beruht auf der kapillarviskosimetrischen Bestimmung der relativen Lösungsviskosität. Hierzu wird die Testsubstanz in Toluol durch dreißigminütiges Schütteln aufgelöst, so dass man eine 1 %-ige Lösung erhält. In einem Vogel-Ossag-Viskosimeter wird bei 25 °C die Auslaufzeit gemessen und daraus in Bezug auf die Viskosität des reinen Lösungsmittels die relative Viskosität der Probenlösung bestimmt. Aus Tabellen kann nach Fikentscher [P. E. Hinkamp, Polymer, 1967, 8, 381] der K-Wert abgelesen werden (K = 1000 k).

Erfindungsgemäß besonders geeignet sind Polyacrylate, die eine enge Molekulargewichtsverteilung (Polydispersität PD < 4) haben. Diese Massen haben trotz eines relativ niedrigen Molekulargewichts nach dem Vernetzen eine besonders gute Scherfestigkeit. Zudem ermöglicht die niedrigere Polydispersität eine leichtere Verarbeitung aus der Schmelze, da die Fließviskosität gegenüber einem breiter verteilten Polyacrylat bei weitgehend gleichen Anwendungseigenschaften geringer ist. Eng verteilte Poly(meth)acrylate können vorteilhaft durch anionische Polymerisation oder durch kontrollierte radikalische Polymerisationsmethoden hergestellt werden, wobei letzteres besonders gut geeignet ist. Auch über *N*-Oxyle lassen sich entsprechende Polyacrylate herstellen. Ferner lässt sich in vorteilhafter Weise die Atom Transfer Radical Polymerization (ATRP) zur Synthese eng verteilter Polyacrylate einsetzen, wobei als Initiator bevorzugt monofunktionelle oder difunktionelle sekundäre oder tertiäre Halogenide und zur Abstraktion des(r) Halogenids(e) Cu-, Ni-, Fe-, Pd-, Pt-, Ru-, Os-, Rh-, Co-, Ir-, Ag- oder Au-Komplexe eingesetzt werden.

Die Monomere zur Herstellung der Poly(meth)acrylate enthalten bevorzugt anteilig funktionelle Gruppen, die geeignet sind, mit Epoxidgruppen Verknüpfungsreaktionen einzugehen. Dies ermöglicht vorteilhaft eine thermische Vernetzung der Polyacrylate durch Reaktion mit Epoxiden. Unter Verknüpfungsreaktionen werden insbesondere Additions- und Substitutionsreaktionen verstanden. Bevorzugt kommt es also zu einer Verknüpfung der die funktionellen Gruppen tragenden Bausteine mit Epoxidgruppen tragenden Bausteinen, insbesondere im Sinne einer Vernetzung der die funktionellen Gruppen tragenden Polymerbausteine über Epoxidgruppen tragende Vernetzermoleküle als Verknüpfungsbrücken. Bei den epoxidgruppenhaltigen Substanzen handelt es sich bevorzugt um multifunktionelle Epoxide, also solche mit mindestens zwei Epoxidgruppen; entsprechend kommt es bevorzugt insgesamt zu einer mittelbaren Verknüpfung der die funktionellen Gruppen tragenden Bausteine.

Die Poly(meth)acrylate der erfindungsgemäßen Haftklebemasse sind bevorzugt durch Verknüpfungsreaktionen - insbesondere im Sinne von Additions- oder Substitutionsreaktionen - von in ihnen enthaltenen funktionellen Gruppen mit thermischen Vernetzern vernetzt. Es können alle thermischen Vernetzer verwendet werden, die sowohl eine ausreichend lange Verarbeitungszeit gewährleisten, sodass es nicht zu einer Vergelung während des Verarbeitungsprozesses, insbesondere des Extrusionsprozesses, kommt, als auch zu einer schnellen Nachvernetzung des Polymers auf den gewünschten Vernetzungsgrad bei niedrigeren Temperaturen als der Verarbeitungstemperatur, insbesondere bei Raumtemperatur, führen. Möglich ist beispielsweise eine Kombination aus Carboxyl-, Amin- und/oder Hydroxygruppen enthaltenden Polymeren und Isocyanten, insbesondere aliphatischen oder mit Aminen deaktivierten trimerisierten Isocyanaten, als Vernetzer.

Geeignete Isocyanate sind insbesondere trimerisierte Derivate von MDI [4,4-Methylen-di(phenylisocyanat)], HDI [Hexamethylendiisocyanat, 1,6-Hexylendiisocyanat] und/oder IPDI [Isophorondiisocyanat, 5-Isocyanato-1-isocyanatomethyl-1,3,3-trimethylcyclohexan], beispielsweise die Typen Desmodur® N3600 und XP2410 (jeweils BAYER AG: Aliphatische Polyisocyanate, niedrigviskose HDI-Trimerisate). Ebenfalls geeignet ist die oberflächendeaktivierte Dispersion von mikronisiertem trimerisiertem IPDI BUEJ 339®, jetzt HF9® (BAYER AG).

Grundsätzlich zur Vernetzung geeignet sind aber auch andere Isocyanate wie Desmodur VL 50 (Polyisocyanate am MDI-Basis, Bayer AG), Basonat F200WD (aliphatisches Polyisocyanat, BASF AG), Basonat HW100 (wasseremulgierbares polyfunktionelles Isocyanat auf HDI-Basis, BASF AG), Basonat HA 300 (allophanatmodifiziertes Polyisocyanat auf Isocyanurat. HDI-Basis, BASF) oder Bayhydur VPLS2150/1 (hydrophil modifiziertes IPDI, Bayer AG).

Bevorzugt werden thermische Vernetzer zu 0,1 bis 5 Gew.-%, insbesondere zu 0,2 bis 1 Gew.-%, bezogen auf die Gesamtmenge des zu vernetzenden Polymers, eingesetzt.

Bevorzugt sind die Poly(meth)acrylate der erfindungsgemäßen Haftklebemasse mittels Epoxid(en) beziehungsweise mittels einer oder mehrerer epoxidgruppenhaltigen Substanz(en) vernetzt. Bei den epoxidgruppenhaltigen Substanzen handelt es sich insbesondere um multifunktionelle Epoxide, also solche mit zumindest zwei Epoxidgruppen; entsprechend kommt es insgesamt zu einer mittelbaren Verknüpfung der die funktionellen Gruppen tragenden Bausteine

der Poly(meth)acrylate. Die epoxidgruppenhaltigen Substanzen können sowohl aromatische als auch aliphatische Verbindungen sein.

Hervorragend geeignete multifunktionelle Epoxide sind Oligomere des Epichlorhydrins, Epoxyether mehrwertiger Alkohole (insbesondere Ethylen-, Propylen-, und Butylenglycole, Polyglycole, Thiodiglycole, Glycerin, Pentaerythrit, Sorbit, Polyvinylalkohol, Polyallylalkohol und ähnliche), Epoxyether mehrwertiger Phenole [insbesondere Resorcin, Hydrochinon, Bis-(4-hydroxyphenyl)-methan, Bis-(4-hydroxy-3-methylphenyl)-methan, Bis-(4-hydroxy-3,5-dibromphenyl)-methan, Bis-(4-hydroxy-3,5-difluorphenyl)-methan, 1,1-Bis-(4-hydroxyphenyl)ethan, 2,2-Bis-(4-hydroxyphenyl)propan, 2,2-Bis-(4-hydroxy-3-methylphenyl)-propan, 2,2-Bis-(4-hydroxy-3-chlorphenyl)-propan, 2,2-Bis-(4-hydroxy-3,5-dichlorphenyl)-propan, 2,2-Bis-(4-hydroxy-3,5-dichlorphenyl)-propan, Bis-(4-hydroxyphenyl)-phenylmethan, Bis-(4-hydroxyphenyl)-phenylmethan, Bis-(4-hydroxyphenyl)diphenylmethan, Bis (4-hydroxyphenyl)-4'-methylphenylmethan, 1,1-Bis-(4-hydroxyphenyl)-2,2,2-trichlorethan, Bis-(4-hydroxyphenyl)-(4-chlorphenyl)-methan, 1,1-Bis-(4-hydroxyphenyl)-cyclohexan, Bis-(4-hydroxyphenyl)-cyclohexylmethan, 4,4'-Dihydroxydiphenyl, 2,2'-Dihydroxydiphenyl, 4,4'-Dihydroxydiphenylsulfon] sowie deren Hydroxyethylether, Phenol-Formaldehyd-Kondensationsprodukte, wie Phenolalkohole, Phenolaldehydharze und ähnliche, S- und N-haltige Epoxide (zum Beispiel N,N-Diglycidylanilin, N,N'-Dimethyldiglycidyl-4,4-Diaminodiphenylmethan) sowie Epoxide, welche nach üblichen Verfahren aus mehrfach ungesättigten Carbonsäuren oder einfach ungesättigten Carbonsäureresten ungesättigter Alkohole hergestellt worden sind, Glycidylester, Polyglycidylester, die durch Polymerisation oder Mischpolymerisation von Glycidylestern ungesättigter Säuren gewonnen werden können oder aus anderen sauren Verbindungen (Cyanursäure, Diglycidylsulfid, cyclischem Trimethylentrisulfon beziehungsweise deren Derivaten und anderen) erhältlich sind.

Sehr geeignete Ether sind beispielsweise 1,4-Butandioldiglycidether, Polyglycerol-3-glycidether, Cyclohexandimethanoldiglycidether, Glycerintriglycidether, Neopentylglykol-diglycidether, Pentaerythrittetraglycidether, 1,6-Hexandioldiglycidether), Polypropylenglykoldiglycidether, Trimethylolpropantriglycidether, Pentaerythrittetraglycidether, Bisphenol-A-diglycidether und Bisphenol-F-diglycidether.

Besonders bevorzugt für die Poly(meth)acrylate als zu vernetzende Polymere ist die Verwendung eines beispielsweise in der EP 1 978 069 A1 beschriebenen Vernetzer-Beschleuniger-Systems ("Vernetzungssystem"), um eine bessere Kontrolle sowohl über die Verarbeitungszeit, Vernetzungskinetik sowie den Vernetzungsgrad zu erhalten. Das Vernetzer-Beschleuniger-System umfasst zumindest eine epoxidgruppenhaltige Substanz als Vernetzer und zumindest eine bei einer Temperatur unterhalb der Schmelztemperatur des zu vernetzenden Polymers für Vernetzungsreaktionen mittels epoxidgruppenhaltigen Verbindungen beschleunigend wirkende Substanz als Beschleuniger.

Als Beschleuniger werden erfindungsgemäß besonders bevorzugt Amine (formell als Substitutionsprodukte des Ammoniaks aufzufassen; in den folgenden Formeln sind diese Substituenten durch "R" dargestellt und umfassen insbesondere Alkyl- und/oder Arylreste und/oder andere organische Reste) eingesetzt, insbesondere bevorzugt solche Amine, die mit den Bausteinen der zu vernetzenden Polymere keine oder nur geringfügige Reaktionen eingehen.

Prinzipiell können als Beschleuniger sowohl primäre ($NRH_2$), sekundäre ($NR_2H$) als auch tertiäre Amine ($NR_3$) gewählt werden, selbstverständlich auch solche, die mehrere primäre und/oder sekundäre und/oder tertiäre Amingruppen aufweisen. Besonders bevorzugte Beschleuniger sind aber tertiäre Amine wie beispielsweise Triethylamin, Triethylendiamin, Benzyldimethylamin, Dimethylamino-methylphenol, 2,4,6-Tris-(N,N-dimethylaminomethyl)-phenol, N,N'-Bis(3-(dimethyl-amino)propyl)harnstoff. Als Beschleuniger können vorteilhaft auch multifunktionelle Amine wie Diamine, Triamine und/oder Tetramine eingesetzt werden. Hervorragend geeignet sind zum Beispiel Diethylentriamin, Triethylentetramin, Trimethylhexamethylendiamin.

Als Beschleuniger werden darüber hinaus bevorzugt Aminoalkohole verwendet. Besonders bevorzugt werden sekundäre und/oder tertiäre Aminoalkohole eingesetzt, wobei im Falle mehrerer Aminfunktionalitäten pro Molekül bevorzugt mindestens eine, bevorzugt alle Aminfunktionalitäten sekundär und/oder tertiär sind. Als bevorzugte Aminoalkohol-Beschleuniger können Triethanolamin, N,N-Bis(2-hydroxypropyl)ethanolamin, N-Methyldiethanolamin, N-Ethyldiethanolamin, 2-Aminocyclohexanol, Bis(2-hydroxycyclohexyl)methylamin, 2-(Diisopropylamino)ethanol, 2-(Dibutylamino)ethanol, N-Butyldiethanolamin, N-Butylethanolamin, 2-[Bis(2-hydroxyethyl)amino]-2-(hydroxymethyl)-1,3-propandiol, 1-[Bis(2-hydroxyethyl)amino]-2-propanol, Triisopropanolamin, 2-(Dimethylamino)ethanol, 2-(Diethylamino)ethanol, 2-(2-Dimethylaminoethoxy)ethanol, N,N,N'-Trimethyl-N'-hydroxyethylbisaminoethylether, N,N,N'-Trimethylaminoethylethanolamin und/oder N,N,N'-Trimethylaminopropylethanolamin eingesetzt werden.

Weitere geeignete Beschleuniger sind Pyridin, Imidazole (wie beispielsweise 2-Methylimidazol) und 1,8-Diazabicyclo[5.4.0]undec-7-en. Auch cycloaliphatische Polyamine können als Beschleuniger eingesetzt werden. Geeignet sind auch Beschleuniger auf Phosphatbasis wie Phosphine und/oder Phosphoniumverbindungen, wie beispielsweise Triphenylphosphin oder Tetraphenylphosphoniumtetraphenylborat.

Weiterhin kann es vorgesehen sein, dass auch ein an sich haftklebriger Polymerschaum mit einer aus Polyacrylat(en) bestehenden Polymerbasis ober- und/oder unterseitig mit einer Haftklebemasse beschichtet ist, wobei die Polymerbasis dieser Haftklebemasse bevorzugt ebenfalls aus Polyacrylaten besteht. Es können alternativ andere beziehungsweise anders vorbehandelte Klebeschichten, also beispielsweise Haftklebeschichten und/oder hitzeaktivierbare Schichten auf der Basis anderer Polymere als Poly(meth)acrylate zu der geschäumten Schicht kaschiert werden.

Geeignete Basispolymere sind Naturkautschuke, Synthesekautschuke, Acrylatblockcopolymere, Vinylaromatenblockcopolymere, insbesondere Styrolblockcopolymere, EVA, Polyolefine, Polyurethane, Polyvinylether und Silikone. Bevorzugt enthalten diese Schichten keine nennenswerten Anteile an migrierfähigen Bestandteilen, die mit dem Material der geschäumten Schicht so gut verträglich sich, dass sie in signifikanter Menge in die geschäumte Schicht diffundieren und dort die Eigenschaften verändern.

Generell kann die Weichphase des Klebebandes mindestens ein klebrig machendes Harz enthalten. Unter der Bezeichnung "Klebharz", englisch "Tackifier Resins", versteht der Fachmann einen Stoff auf Harzbasis, der die Klebrigkeit erhöht.

Als Klebharze können bei der Selbstklebemasse beispielsweise als Hauptkomponente insbesondere hydrierte und nicht hydrierte Kohlenwasserstoffharze und Polyterpenharze eingesetzt werden. Bevorzugt geeignet sind unter anderem hydrierte Polymerisate des Dicyclopentadiens (zum Beispiel Escorez 5300er Serie; Exxon Chemicals), hydrierte Polymerisate von bevorzugt $C_8$- und Cg-Aromaten (zum Beispiel Regalite und Regalrez Serien; Eastman Inc. oder Arkon P Serie; Arakawa). Diese können durch Hydrierung von Polymerisaten aus reinen Aromatenströmen entfließen oder auch durch Hydrierung von Polymerisaten auf der Basis von Gemischen unterschiedlichen Aromaten basieren. Geeignet sind auch teilhydrierte Polymerisate von $C_8$- und Cg-Aromaten (zum Beispiel Regalite und Regalrez Serien; Eastman Inc. oder Arkon M; Arakawa), hydrierte Polyterpenharze (zum Beispiel Clearon M; Yasuhara), hydrierte $C_5/C_9$-Polymerisate (zum Beispiel ECR-373; Exxon Chemicals), aromatenmodifizierte selektiv hydrierte Dicyclopentadienderivate (zum Beispiel Escorez 5600er Serie; Exxon Chemicals). Die vorgenannten Klebeharze können sowohl allein als auch im Gemisch eingesetzt werden.

Auch andere nicht hydrierte Kohlenwasserstoffharze, nicht hydrierte Analoga der oben beschriebenen hydrierten Harze, können eingesetzt werden. Weiterhin können Kolophonium basierende Harze (zum Beispiel Foral, Foralyn) verwendet werden.

Die vorstehend erwähnten Kolophoniumharze schließen zum Beispiel natürliches Kolophonium, polymerisiertes Kolophonium, teilweise hydriertes Kolophonium, vollständig hydriertes Kolophonium, veresterte Produkte dieser Kolophoniumarten (wie Glycerinester, Pentaerythritester, Ethylenglycolester und Methylester) und Kolophoniumderivate (wie Disproportionierungs-Kolophonium, mit Fumarsäure modifiziertes Kolophonium und mit Kalk modifiziertes Kolophonium) ein.

Erfindungsgemäß bevorzugte Klebharze sind (teil-)hydrierte Kohlenwasserstoffharze auf Basis von $C_5$-, $C_5/C_9$- oder Cg sowie Polyterpenharze auf Basis von $\alpha$-Pinen und/oder $\beta$-Pinen und/oder $\delta$-Limonen sowie Terpenphenolharze. Ganz besonders bevorzugt sind Terpenphenolharze, und zwar insbesondere nur Terpenphenolharze, ohne dass weitere Harztypen Verwendung finden.

Zur Stabilisierung der Haftklebemasse werden üblicherweise primäre Antioxidantien wie zum Beispiel sterisch gehinderte Phenole, sekundäre Antioxidantien wie zum Beispiel Phosphite oder Thioether und/oder C-Radikalfänger zugesetzt.

Der Haftklebemasse können zur Einstellung von optischen und klebtechnischen Eigenschaften Additive wie Füllstoffe, Farbstoffe oder Alterungsschutzmittel (Antiozonantien, Lichtschutzmittel usw.) enthalten.

Als Additive zur Klebemasse werden typischerweise genutzt:

- primäre Antioxidantien wie zum Beispiel sterisch gehinderte Phenole
- sekundäre Antioxidantien wie zum Beispiel Phosphite oder Thioether
- Lichtschutzmittel wie zum Beispiel UV-Absorber oder sterisch gehinderte Amine

Die Füllstoffe können verstärkend oder nicht verstärkend sein. Vor allem zu nennen sind hier Siliziumdioxide (sphärisch, nadelförmig oder unregelmäßig wie die pyrogenen Silicas), Kalziumcarbonate, Zinkoxide, Titandioxide, Aluminiumoxide oder Aluminiumoxidhydroxide.

Die Konzentration der die optischen und klebtechnischen Eigenschaften beeinflussenden Additive liegt vorzugsweise bei bis zu 20 Gew.-%, weiter vorzugsweise bei bis zu 15 Gew. %.

Die aufgezählten Stoffe sind nicht zwingend, die Klebemasse funktioniert auch, ohne dass diese einzeln oder in beliebiger Kombination zugesetzt sind, also ohne Füllstoffe und/oder Farbstoffe und/oder Alterungsschutzmittel.

Die Weichphase des Klebebandes kann einen oder mehrere Additive enthalten. Der oder die Additiv(e) kann/können in einer oder in mehreren Schichten der Weichphase vorliegen.

Bevorzugt umfasst die Weichphase einen Polymerschaum, und der Polymerschaum enthält teil- oder vollexpandierte Mikroballons, insbesondere, wenn die Polymerbasis des Polymerschaums ein oder mehrere Polyacrylat(e) umfasst und ganz besonders bevorzugt, wenn die Polymerbasis des Polymerschaums aus einem oder mehreren Polyacrylat(en) besteht. Bei Mikroballons handelt es sich um elastische Hohlkugeln, die eine thermoplastische Polymerhülle aufweisen; sie werden daher auch als expandierbare polymere Mikrosphären oder als Mikrohohlkugeln bezeichnet. Diese Kugeln sind mit niedrigsiedenden Flüssigkeiten oder verflüssigtem Gas gefüllt. Als Hüllenmaterial finden insbesondere Polyacrylnitril, Polyvinyldichlorid (PVDC), Polyvinylchlorid (PVC), Polyamide oder Polyacrylate Verwendung.

Als niedrigsiedende Flüssigkeit sind insbesondere niedere Alkane, beispielsweise Isobutan oder Isopentan geeignet, die als verflüssigtes Gas unter Druck in der Polymerhülle eingeschlossen sind. Durch ein physikalisches Einwirken auf die Mikroballons, beispielsweise durch eine Wärmeeinwirkung - insbesondere durch Wärmezufuhr oder -erzeugung, hervorgerufen zum Beispiel durch Ultraschall oder Mikrowellenstrahlung - erweicht einerseits die äußere Polymerhülle, gleichzeitig geht das in der Hülle befindliche flüssige Treibgas in seinen gasförmigen Zustand über. Bei einer bestimmten Paarung von Druck und Temperatur - auch als kritische Paarung bezeichnet - dehnen sich die Mikroballons irreversibel aus und expandieren dreidimensional. Die Expansion ist beendet, wenn sich der Innen- und der Außendruck ausgleichen. Da die polymere Hülle erhalten bleibt, erzielt man so einen geschlossenzelligen Schaum.

Es ist eine Vielzahl an Mikroballontypen kommerziell erhältlich, wie zum Beispiel von der Firma Akzo Nobel die Expancel DU-Typen (dry unexpanded), welche sich im Wesentlichen über ihre Größe (6 bis 45 μm Durchmesser im unexpandierten Zustand) und ihre zur Expansion benötigte Starttemperatur (75 °C bis 220 °C) differenzieren. Weiterhin sind unexpandierte Mikroballontypen auch als wässrige Dispersion mit einem Feststoff- beziehungsweise Mikroballonanteil von ca. 40 bis 45 Gew.-% erhältlich, darüber hinaus auch als polymergebundende Mikroballons (Masterbatche), zum Beispiel in Ethylvinylacetat mit einer Mikroballonkonzentration von ca. 65 Gew.-%. Ferner sind sogenannte Mikroballon-Slurry-Systeme erhältlich, bei denen die Mikroballons mit einem Feststoffanteil von 60 bis 80 Gew.-% als wässrige Dispersion vorliegen. Sowohl die Mikroballon-Dispersionen, die Mikroballon-Slurrys als auch die Masterbatche sind wie die DU-Typen zur Schäumung eines in der Weichphase des Klebebandes enthaltenen Polymerschaums geeignet.

Besonders bevorzugt enthält der Polymerschaum Mikroballons, die im nicht expandierten Zustand bei 25 °C einen Durchmesser von 3 μm bis 40 μm, insbesondere von 5 μm bis 20 μm, und/oder nach Expansion einen Durchmesser von 10 μm bis 200 μm, insbesondere von 15 μm bis 90 μm, aufweisen.

Bevorzugt enthält der Polymerschaum bis zu 30 Gew.-% Mikroballons, insbesondere zwischen 0,5 Gew.-% und 10 Gew.-%, jeweils bezogen auf die Gesamtmasse des Polymerschaums.

Der Polymerschaum der Weichphase des Klebebandes - sofern diese einen Polymerschaum umfasst - ist bevorzugt gekennzeichnet durch die weitgehende Abwesenheit von offenzelligen Hohlräumen. Besonders bevorzugt weist der Polymerschaum einen Anteil von Hohlräumen ohne eigene Polymerhülle, also von offenzelligen Kavernen, von nicht mehr als 2 Vol-% auf, insbesondere von nicht mehr als 0,5 Vol.-%. Der Polymerschaum ist somit bevorzugt ein geschlossenzelliger Schaum.

Eine Haftklebemasse, die expandierte polymere Mikrokugeln enthält, kann auch teilweise nicht vollständig oder gar nicht expandierte Mikrokugeln enthalten. Im Prozess stellt sich vielmehr eine Verteilung unterschiedlicher Expansionszustände ein. Im erfindungsgemäßen Sinne bedeutet, dass expandierte Mikroballons voll- aber auch teilexpandierte Mikroballons umfassen. Nicht expandierte Mikroballons können zusätzlich vorhanden sein.

Eine expandierbare Mikrohohlkugeln enthaltende Polymermasse darf zusätzlich auch nichtexpandierbare Mikrohohlkugeln enthalten. Entscheidend ist nur, dass nahezu alle Gas beinhaltenden Kavernen geschlossen sind durch eine dauerhaft dichte Membran, egal ob diese Membran nun aus einer elastischen und thermoplastisch dehnbaren Polymermischung besteht oder etwa aus elastischem und/oder - im Spektrum der in der Kunststoffverarbeitung möglichen Temperaturen - nicht-thermoplastischem Glas.

Geeignet für die Haftklebemasse sind außerdem - unabhängig gewählt von anderen Additiven - Polymervollkugeln wie PMMA-Kugeln, Glashohlkugeln, Glasvollkugeln, Phenolharzkugeln, keramische Hohlkugeln, keramische Vollkugeln und/oder Kohlenstoffvollkugeln ("Carbon Micro Balloons"), vorzugsweise sind die genannten Bestandteile nicht in der Haftklebemasse enthalten.

Die geschäumte Haftklebemasse stellt einen syntaktischen Schaum dar. Bei einem syntaktischen Schaum sind die Hohlräume voneinander getrennt und die in den Hohlräumen befindlichen Substanzen (Gas, Luft) durch eine Membran von der umgebenden Matrix abgetrennt. Dadurch ist das Material wesentlich stärker als herkömmliche Schäume mit unverstärkten Gaseinschlüssen.

Optional kann die Weichphase des Klebebandes auch pulver- und/oder granulatförmige Füllstoffe, Farbstoffe und Pigmente, insbesondere auch abrasive und verstärkende Füllstoffe wie zum Beispiel Kreiden ($CaCO_3$), Titandioxide, Zinkoxide und Ruße auch zu hohen Anteilen, das heißt von 0,1 bis 50 Gew.-%, bezogen auf die Gesamtmasse der Weichphase, enthalten.

Weiterhin können schwerentflammbare Füllstoffe wie beispielsweise Ammoniumpoly-phosphat; elektrisch leitfähige Füllstoffe wie beispielsweise Leitruß, Kohlenstofffasern und/oder silberbeschichtete Kugeln; thermisch leitfähige Materialien wie beispielsweise Bornitrid, Aluminiumoxid, Siliciumcarbid; ferromagnetische Additive wie beispielsweise Eisen-(III)-oxide; weitere Additive zur Volumenerhöhung, wie beispielsweise Blähmittel, Glasvollkugeln, Glashohlkugeln, carbonisierte Mikrokugeln, phenolische Mikrohohlkugeln, Mikrokugeln aus anderen Materialien; Kieselsäure, Silicate, organisch nachwachsende Rohstoffe wie beispielsweise Holzmehl, organische und/oder anorganische Nanopartikel, Fasern; Alterungsschutzmittel, Lichtschutzmittel, Ozonschutzmittel und/oder Compoundierungsmittel in der Weichphase enthalten sein. Als Alterungsschutzmittel können bevorzugt sowohl primäre, zum Beispiel 4-Methoxyphenol oder Irganox® 1076, als auch sekundäre Alterungsschutzmittel, zum Beispiel Irgafos® TNPP oder Irgafos® 168 der Firma BASF, gegebenenfalls auch in Kombination miteinander, eingesetzt werden. Als weitere Alterungsschutzmittel können Phenothiazin (C-Radikalfänger) sowie Hydrochinonmethylether in Gegenwart von Sauerstoff sowie Sauerstoff selbst eingesetzt werden.

Die Dicke der Weichphase beträgt vorzugsweise 200 bis 1800 μm, besonders bevorzugt 300 bis 1500 μm, insbesondere 400 bis 1000 μm. Die Dicke der Weichphase wird nach ISO 1923 bestimmt.

Die Verbindung von Hart- und Weichphase beziehungsweise auch von in der Hart- und/oder Weichphase vorgesehenen Schichten untereinander zum Klebeband kann beispielsweise durch Laminieren, Kaschieren oder Coextrusion erfolgen. Es ist möglich, dass Hart- und Weichphase direkt, das heißt unmittelbar, miteinander verbunden sind. Ebenso ist es möglich, dass zwischen Hart- und Weichphase eine oder mehrere haftvermittelnde Schicht(en) angeordnet ist/sind. Das Klebeband kann darüber hinaus weitere Schichten enthalten.

Bevorzugt ist mindestens eine der miteinander zu verbindenden Schichten, stärker bevorzugt sind mehrere der miteinander zu verbindenden Schichten und ganz besonders bevorzugt sind alle der miteinander zu verbindenden Schichten mit Corona- (mit Luft oder Stickstoff), Plasma- (Luft, Stickstoff oder andere reaktive Gase beziehungsweise reaktive, als Aerosol einsetzbare Verbindungen) oder Flammenvorbehandlungsmethoden vorbehandelt.

Auf der Rückseite, das heißt auf der vom Substrat abgewandten Seite der Hartphase, ist bevorzugt eine Funktionsschicht aufgebracht, die beispielsweise Trenneigenschaften oder UVstabilisierende Eigenschaften aufweist. Diese Funktionsschicht besteht bevorzugt aus einer Folie mit einer Dicke von ≤ 20 μm, besonders bevorzugt von ≤ 10 μm, insbesondere von ≤ 8 μm, beispielsweise von ≤ 5 μm oder einem Lack mit einer Dicke von ≤ 10 μm, besonders bevorzugt von ≤ 6 μm, insbesondere von ≤ 3 μm, beispielsweise von ≤ 1,5 μm. Sowohl die Folie als auch der Lack enthalten bevorzugt einen UV-Absorber, und/oder die Polymerbasis der Folie beziehungsweise des Lacks enthalten UV-absorbierende und/oder UV-abweisende Gruppen.

Folien können durch Laminieren, Kaschieren oder Coextrusion auf die Rückseite der Hartphase aufgebracht werden. Bei der Folie handelt es sich bevorzugt um eine metallisierte Folie. Die Polymerbasis der Folie ist bevorzugt ausgewählt aus der Gruppe bestehend aus Polyarylenen, Polyvinylchloriden (PVC), Polyethylenterephthalaten (PET), Polyurethanen, Polyolefinen, Polyutylenterephthalaten (PBT), Polycarbonaten, Polymethylmethacrylaten (PMMA), Polyvinylbutyralen (PVB), Ionomeren und Mischungen aus zwei oder mehreren der vorstehend aufgeführten Polymere. "Hauptbestandteil" bedeutet hier "Bestandteil mit dem größten Gewichtsanteil, bezogen auf das Gesamtgewicht der Folie". Mit Ausnahme der Polyarylene weisen alle aufgeführten Materialien der Folie bevorzugt einen hohen Gehalt an UV-Stabilisatoren auf.

In einer speziellen Ausführungsform besteht das Klebeband in auf das Substrat gerichteter Reihenfolge aus einer Funktionsschicht (wie vorstehend beschrieben); einer Hartphase und einer Weichphase bestehend aus einer Haftklebeschicht, einem Polymerschaum, dessen Polymerbasis aus einem oder mehreren Polyolefinen besteht, und einer weiteren Haftklebeschicht. Die untere Haftklebeschicht kann mit einem Releaseliner abgedeckt sein, dieser wird jedoch nicht zum Klebeband gerechnet.

In einer weiteren speziellen Ausführungsform besteht das Klebeband in auf das Substrat gerichteter Reihenfolge aus einer Funktionsschicht (wie vorstehend beschrieben); einer Hartphase und einer haftklebrigen Weichphase, deren Polymerbasis aus einem oder mehreren Polyacrylaten besteht. Auch bei dieser Ausführungsform kann die Unterseite, das heißt die dem Substrat zugewandte Seite, der Weichphase mit einem Releaseliner abgedeckt sein, dieser wird jedoch nicht zum Klebeband gerechnet.

Bevorzugt handelt es sich bei den Klebebändern um geschäumte Acrylatmassen insbesondere der oben beschriebenen Art, die zusätzlich einen (oder mehrere) Zwischenträger haben können. Besonders bevorzugt eingesetzte doppelseitig klebende Klebebänder sind Klebebandrollen aus dem *ACX*$^{plus}$-Sortiment der Firma tesa.

Bezüglich der in Verfahrensschritt c) verwendeten Zusammensetzung gelten mutatis mutandis die Ausführungen zum ersten Erfindungsgegenstand. Insbesondere wird in Verfahrensschritt c) des erfindungsgemäßen Verfahrens eine der zuvor beschriebenen Zusammensetzungen Z1 bis Z3 eingesetzt.

Die beiden Fügeteile sind, unabhängig voneinander, bevorzugt ausgewählt aus Glas, Holz, Kunststoff, Metallen, beschichteten Metallen, Panelen, Versteifungsprofilen, Beton sowie Putz. Besonders bevorzugt handelt es sich bei einem Fügeteil um eine Glasplatte und bei dem zweiten Fügeteil um ein Rahmenelement aus Aluminium oder Kunststoff. Die Fügung kann hierbei auf dem Rahmenelement oder in dem Rahmenelement erfolgen.

Bezüglich weiterer bevorzugter Ausführungsformen des erfindungsgemäßen Verfahrens, insbesondere bezüglich der verwendeten Zusammensetzung, gilt mutatis mutandis das in Bezug auf die erfindungsgemäßen Verwendung Gesagte.

Schließlich ist ein letzter Gegenstand der vorliegenden Erfindung ein Kit-of-parts, umfassend

a) mindestens ein Fügeteil
b) mindestens ein Fügemittel, wobei das Fügemittel beidseitig mit einer Haftklebemasse ausgestattet ist
c) eine erfindungsgemäß verwendete Zusammensetzung,

wobei das Fügeteil a) und das Fügemittel b) separat vorliegen oder wobei das Fügemittel b) einseitig auf das Fügeteil

a) aufgebracht ist.

Als Fügemittel sind insbesondere die im Zusammenhang mit dem erfindungsgemäßen Verfahren beschriebenen doppelseitigen Klebebänder enthalten. Weiterhin kann das Kit-of-parts eine Gebrauchsanleitung enthalten, in welcher das vertikale Fügen beschrieben ist. Das mindestens eine Fügeteil ist bevorzugt ausgewählt aus Glas, Holz, Kunststoff, Metallen, beschichteten Metallen, Panelen, Versteifungsprofilen, Beton sowie Putz.

Im Rahmen dieses Erfindungsgegenstands ist es bevorzugt, wenn das Kit-of-parts mindestens ein weiteres Fügeteil enthält.

Bezüglich weiterer bevorzugter Ausführungsformen des erfindungsgemäßen Kit-of-parts, insbesondere bezüglich der verwendeten Zusammensetzung, Fügemittel und Fügeteile, gilt mutatis mutandis das in Bezug auf die erfindungsgemäßen Verwendung sowie das erfindungsgemäße Verfahren Gesagte.

Die Erfindung betrifft insbesondere die folgenden Ausführungsformen:
Nach einer ersten Ausführungsform betrifft die vorliegende Erfindung die Verwendung einer Zusammensetzung, enthaltend

a) mindestens einen Alkohol und
b) mindestens ein Verdickungsmittel,

zur Reduzierung von Lufteinschlüssen bei der vertikalen Verklebung zweier Fügeteile, wobei die Zusammensetzung

- eine Viskosität von 1000 bis 4000 Pa*s bei einer Scherrate von 0,001/s und 25 °C und
- eine Viskosität von 0,1 bis 0,3 Pa*s bei einer Scherrate von 1000/s und 25 °C aufweist.

Nach einer zweiten Ausführungsform betrifft die vorliegende Erfindung die Verwendung einer Zusammensetzung nach Ausführungsform 1, dadurch gekennzeichnet, dass der mindestens eine Alkohol a) ausgewählt ist aus linearen oder verzweigten $C_1$-$C_{10}$-Alkoholen, bevorzugt aus Ethanol, Propan-1-ol und Propan-2-ol, insbesondere aus einer Mischung von Ethanol und Propan-2-ol.

Nach einer dritten Ausführungsform betrifft die vorliegende Erfindung die Verwendung einer Zusammensetzung nach einer der Ausführungsformen 1 oder 2, dadurch gekennzeichnet, dass die Zusammensetzung den mindestens einen Alkohol a) in einer Gesamtmenge von 30 bis 80 Gew.-%, vorzugsweise von 40 bis 75 Gew.-%, bevorzugt von 45 bis 70 Gew.-%, insbesondere von 50 bis 60 Gew.-%, jeweils bezogen auf das Gesamtgewicht der Zusammensetzung, enthält.

Nach einer vierten Ausführungsform betrifft die vorliegende Erfindung die Verwendung einer Zusammensetzung nach einer der vorangehenden Ausführungsformen, dadurch gekennzeichnet, dass die Zusammensetzung Ethanol in einer Gesamtmenge von 40 Gew.-% und Propan-2-ol in einer Gesamtmenge von 19 bis 20 Gew.-%, jeweils bezogen auf das Gesamtgewicht der Zusammensetzung, enthält.

Nach einer fünften Ausführungsform betrifft die vorliegende Erfindung die Verwendung einer Zusammensetzung nach einer der vorangehenden Ausführungsformen, dadurch gekennzeichnet, dass das Verdickungsmittel b) ausgewählt ist aus der Gruppe von (i) linearen oder vernetzten Homopolymeren von (Meth)acrylsäure und (Meth)acrylaten, (ii) linearen oder vernetzten Copolymeren von (Meth)acrylsäure und (Meth)acrylaten, (iii) Poly(2-acrylamido-2-methylpropansulfonsäure), (iv) Poly(ammonium-2-acrylamido-2-methylpropansulfonat), (v) Cellulosegummi, (vi) Hydroxyethylcellulose und Hydroxypropylcellulose, (vii) Chitosan, sowie (viii) deren Mischungen, insbesondere ausgewählt ist aus vernetzten Copolymeren von (Meth)acrylsäure und $C_{10}$-$C_{30}$-(Meth)alkylacrylaten.

Nach einer sechsten Ausführungsform betrifft die vorliegende Erfindung die Verwendung einer Zusammensetzung nach einer der vorangehenden Ausführungsformen, dadurch gekennzeichnet, dass die Zusammensetzung zusätzlich mindestens ein Neutralisationsmittel c), ausgewählt aus der Gruppe von (i) anorganischen Basen, insbesondere Natriumhydroxid und Kaliumhydroxid, (ii) Monoaminen, insbesondere Triethanolamin, Aminopropylmethan, Diisopropanolamin, Triisopropanolamin und 2-Amino-2-(Hydroxymethyl)-1,3-propandiol, (iii) Diaminen, insbesondere Tetrahydroxypropylethylendiamin, (iv) ethoxylierten Aminen, insbesondere ethoxyliertem Cocosamin mit 15 EO-Einheiten pro Molekül Cocosamin, sowie (v) deren Mischungen, enthält.

Nach einer siebten Ausführungsform betrifft die vorliegende Erfindung die Verwendung einer Zusammensetzung nach einer der Ausführungsformen 1 bis 5, dadurch gekennzeichnet, dass die Zusammensetzung zusätzlich mindestens ein Co-Verdickungsmittel d) enthält, wobei das Co-Verdickungsmittel d) ausgewählt ist aus Aminoxiden der allgemeinen Formel (I)

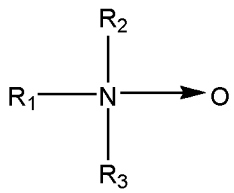

(I)

worin
$R_1$ bis $R_3$, jeweils unabhängig voneinander, für einen aliphatischen Alkyl-, Isoalkyl- oder Alkylenrest, einen alicylischen tertiären Alkyl- oder Amidoalkylrest mit jeweils 1 bis 22 Kohlenstoffatomen oder eine Oxalkylgruppe der Formel $-(C_nH_{2n}O)_xH$ mit n = 2 oder 3 und x = 1 bis 25, stehen.

Nach einer achten Ausführungsform betrifft die vorliegende Erfindung die Verwendung einer Zusammensetzung nach Ausführungsform 7, dadurch gekennzeichnet, dass die Zusammensetzung ein Gewichtsverhältnis der Gesamtmenge an Verdickungsmittel b) zu der Gesamtmenge an Co-Verdickungsmittel d) von 1 : 1 bis 1 : 3 enthält.

Nach einer neunten Ausführungsform betrifft die vorliegende Erfindung die Verwendung einer Zusammensetzung nach einer der vorangehenden Ausführungsformen, dadurch gekennzeichnet, dass die Zusammensetzung das Verdickungsmittel b) und gegebenenfalls das Co-Verdickungsmittel d) in einer Gesamtmenge von 0,5 bis 5 Gew.-%, insbesondere von 0,5 bis 2,5 Gew.-%, jeweils bezogen auf das Gesamtgewicht der Zusammensetzung, enthält.

Nach einer zehnten Ausführungsform betrifft die vorliegende Erfindung die Verwendung einer Zusammensetzung nach einer der vorangehenden Ausführungsformen, dadurch gekennzeichnet, dass die Zusammensetzung Wasser in einer Gesamtmenge von 0 bis 70 Gew.-%, insbesondere von 10 bis 45 Gew.-%, jeweils bezogen auf das Gesamtgewicht der Zusammensetzung, enthält. Nach einer elften Ausführungsform betrifft die vorliegende Erfindung die Verwendung einer Zusammensetzung nach einer der vorangehenden Ausführungsformen, dadurch gekennzeichnet, dass die Zusammensetzung eine Viskosität von 0,2 Pa*s bei einer Scherrate von 1000/s und 25 °C aufweist.

Nach einer zwölften Ausführungsform betrifft die vorliegende Erfindung die Verwendung einer Zusammensetzung nach einer der vorangehenden Ausführungsformen Verfahren zur vertikalen Verklebung zweier Fügeteile, wobei das Verfahren die nachfolgenden Schritte in der angegebenen Reihenfolge umfasst:

a) Aufbringen einer ersten Haftklebemasse eines doppelseitigen Klebebands auf ein erstes Fügeteil,
b) Entfernen der Trennschicht des doppelseitigen Klebebands von der zweiten Haftklebemasse des Klebebands,
c) Vollflächiges Aufbringen einer Zusammensetzung nach einer der Ausführungsformen 1 bis 11 auf die zweite Haftklebemasse des Klebebands,
d) Vertikales Fügen eines zweiten Fügeteils auf die mit der Zusammensetzung vollflächig benetzte zweite Haftklebemasse des Klebebands.

Nach einer dreizehnten Ausführungsform betrifft die vorliegende Erfindung ein Kit-of-parts, umfassend

a) mindestens ein Fügeteil
b) mindestens ein Fügemittel, wobei das Fügemittel beidseitig mit einer Haftklebemasse ausgestattet ist
c) eine Zusammensetzung nach einer der Ausführungsformen 1 bis 11,

wobei das Fügeteil a) und das Fügemittel b) separat vorliegen oder wobei das Fügemittel b) einseitig auf das Fügeteil a) aufgebracht ist.

Nach einer vierzehnten Ausführungsform betrifft die vorliegende Erfindung die ein Kit-of-parts nach Ausführungsform 13, dadurch gekennzeichnet, dass mindestens ein weiteres Fügeteil enthalten ist.

Die vorliegende Erfindung wird im Folgenden anhand von Ausführungsbeispielen näher erläutert. Solange es nicht anders angegeben wird, sind alle Anteile von Komponenten jeweils auf ihr Gewicht bezogen angegeben

**Beispiele:**

**Verwendete Zusammensetzungen:**

Zusammensetzung Z1 (nicht erfindungsgemäß): Brenngel (verdicktes Kaminethanol) Zusammensetzung Z2 (nicht erfindungsgemäß): Laborethanol, verdickt mit Raco Coat Zusammensetzung Z3 (erfindungsgemäß): Mischung aus 40 Gew.-% Ethanol und 19,2 Gew.-% Propan-2-ol in Wasser, verdickt mit einem zuvor angeführten Verdickungsmittel b) und einem Neutralisationsmittel c) oder einem Co-Verdickungsmittel d) der Formel (I)

**Viskositätsmessung:**

Die Viskositätsmessungen wurden bei 25 °C mit dem Gerät DSR Klasse (DSR I) (Messkopf: 200 g Luftgelagert mit Normalkraft, Temperierung: Peltierelement, Messgeometrie: Zylindersystem, Durchmesser: 27,5 mm (Becher), 26,0 mm (Zylinder)) durchgeführt. Es wurden Scherraten von 0,05 bis 540 Pa verwendet.

**Vertikales Fügen zweier Bauteile:**

Auf ein erstes Bauteil (Aluminiumprofil) wurde zunächst ein doppelseitiges Klebeband (Tesa® $ACX^{plus}$) aufgebracht und die Trennbeschichtung von der zweiten Haftklebemasse des Klebebands entfernt. Die Zusammensetzungen Z1 bis Z3 wurden nun jeweils vollflächig auf diese zweite Haftklebemasse aufgebracht, wobei für jede Zusammensetzung ein eigenes erstes Bauteil verwendet wurde. Anschließend wurde jeweils ein zweites Bauteil (Glasplatte) auf die mit der Zusammensetzung Z1 bis Z3 benetzten zweiten Haftklebemasse gefügt und das Auftreten von Blasen auf der Fügeseite beurteilt.

Bei Verwendung der Zusammensetzung Z1 ist die zweite Haftklebemasse des Klebebands von dem zu fügenden Bauteil abgerutscht, was eine genaue Positionierung der Bauteile verhindert. Dieses Verhalten wird auf die viel zu niedrige Viskosität von 0,01 Pa*s bei einer Scherrate von 1000/s zurückgeführt.

Bei Verwendung der Zusammensetzung Z2 bestand das Problem darin, dass diese beim Aufstellen des ersten Bauteils mit benetzter zweiter Haftklebemasse von der Fügeseite des Klebebandes selbstständig abgelaufen ist. Dadurch steht die Zusammensetzung nicht mehr als Applikationshilfe zur Verfügung und es kommt beim Fügen zum Einschluss von Blasen auf der Fügeseite des Klebebandes. Der Grund für dieses Verhalten ist die mit 400 Pa*s zu niedrige Viskosität bei einer Scherrate von 0,001/s.

Lediglich bei Verwendung der erfindungsgemäßen Zusammensetzung Z3 zur vollflächigen Benetzung der Haftklebemasse vor der vertikalen Fügung des zweiten Bauteils wurde eine blasenfreie Fügung erhalten. Folglich ist für die blasenfreie vertikale Fügung zweier Bauteile der Einsatz einer verdickten alkoholischen Zusammensetzung mit einer Viskosität von 1000 bis 4000 Pa*s bei einer Scherrate von 0,001/s und 25 °C sowie eine Viskosität von 0,1 bis 0,3 Pa*s bei eine Scherrate von 1000/s und 25 °C erforderlich.

## Patentansprüche

**1.** Verwendung einer Zusammensetzung, enthaltend

a) mindestens einen Alkohol und
b) mindestens ein Verdickungsmittel,

zur Reduzierung von Lufteinschlüssen bei der vertikalen Verklebung zweier Fügeteile, wobei die Zusammensetzung

- eine Viskosität von 1000 bis 4000 Pa*s bei einer Scherrate von 0,001/s und 25 °C und
- eine Viskosität von 0,1 bis 0,3 Pa*s bei einer Scherrate von 1000/s und 25 °C aufweist.

**2.** Verwendung einer Zusammensetzung nach Anspruch 1, **dadurch gekennzeichnet, dass** der mindestens eine Alkohol a) ausgewählt ist aus linearen oder verzweigten $C_1$-$C_{10}$-Alkoholen, bevorzugt aus Ethanol, Propan-1-ol und Propan-2-ol, insbesondere aus einer Mischung von Ethanol und Propan-2-ol.

**3.** Verwendung einer Zusammensetzung nach einem der Ansprüche 1 oder 2, **dadurch gekennzeichnet, dass** die Zusammensetzung den mindestens einen Alkohol a) in einer Gesamtmenge von 30 bis 80 Gew.-%, vorzugsweise von 40 bis 75 Gew.-%, bevorzugt von 45 bis 70 Gew.-%, insbesondere von 50 bis 60 Gew.-%, jeweils bezogen auf das Gesamtgewicht der Zusammensetzung, enthält.

**4.** Verwendung einer Zusammensetzung nach einem der vorangehenden Ansprüche, **dadurch gekennzeichnet, dass** die Zusammensetzung Ethanol in einer Gesamtmenge von 40 Gew.-% und Propan-2-ol in einer Gesamtmenge von 19 bis 20 Gew.-%, jeweils bezogen auf das Gesamtgewicht der Zusammensetzung, enthält.

**5.** Verwendung einer Zusammensetzung nach einem der vorangehenden Ansprüche, **dadurch gekennzeichnet, dass** das Verdickungsmittel b) ausgewählt ist aus der Gruppe von (i) linearen oder vernetzten Homopolymeren von (Meth)acrylsäure und (Meth)acrylaten, (ii) linearen oder vernetzten Copolymeren von (Meth)acrylsäure und (Meth)acrylaten, (iii) Poly(2-acrylamido-2-methylpropan-sulfonsäure), (iv) Poly(ammonium-2-acrylamido-2-methylpropansulfonat), (v) Cellulosegummi, (vi) Hydroxyethylcellulose und Hydroxypropylcellulose, (vii) Chitosan sowie (viii) deren Mischungen, insbesondere ausgewählt ist aus vernetzten Copolymeren von (Meth)acrylsäure und $C_{10}$- bis $C_{30}$-(Meth)alkylacrylaten.

**6.** Verwendung einer Zusammensetzung nach einem der vorangehenden Ansprüche, **dadurch gekennzeichnet, dass** die Zusammensetzung zusätzlich mindestens ein Neutralisationsmittel c), ausgewählt aus der Gruppe von (i) anorganischen Basen, insbesondere Natriumhydroxid und Kaliumhydroxid, (ii) Monoaminen, insbesondere Triethanolamin, Aminopropylmethan, Diisopropanolamin, Triisopropanolamin und 2-Amino-2-(Hydroxymethyl)-1,3-propandiol, (iii) Diaminen, insbesondere Tetrahydroxypropylethylendiamin, (iv) ethoxylierten Aminen, insbesondere ethoxyliertem Cocosamin mit 15 EO-Einheiten pro Molekül Cocosamin, sowie (v) deren Mischungen, enthält.

**7.** Verwendung einer Zusammensetzung nach einem der Ansprüche 1 bis 5, **dadurch gekennzeichnet, dass** die Zusammensetzung zusätzlich mindestens ein Co-Verdickungsmittel d) enthält, wobei das Co-Verdickungsmittel d) ausgewählt ist aus Aminoxiden der allgemeinen Formel (I)

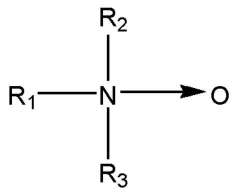

(I)

worin
$R_1$ bis $R_3$, jeweils unabhängig voneinander, für einen aliphatischen Alkyl-, Isoalkyl- oder Alkylenrest, einen alicylischen tertiären Alkyl- oder Amidoalkylrest mit jeweils 1 bis 22 Kohlenstoffatomen oder eine Oxalkylgruppe der Formel $-(C_nH_{2n}O)_xH$ mit n = 2 oder 3 und x = 1 bis 25, stehen.

**8.** Verwendung einer Zusammensetzung nach Anspruch 7, **dadurch gekennzeichnet, dass** die Zusammensetzung ein Gewichtsverhältnis der Gesamtmenge an Verdickungsmittel b) zu der Gesamtmenge an Co-Verdickungsmittel d) von 1 : 1 bis 1 : 3 enthält.

**9.** Verwendung einer Zusammensetzung nach einem der vorangehenden Ansprüche, **dadurch gekennzeichnet, dass** die Zusammensetzung das Verdickungsmittel b) und gegebenenfalls das Co-Verdickungsmittel d) in einer Gesamtmenge von 0,5 bis 5 Gew.-%, insbesondere von 0,5 bis 2,5 Gew.-%, jeweils bezogen auf das Gesamtgewicht der Zusammensetzung, enthält.

**10.** Verwendung einer Zusammensetzung nach einem der vorangehenden Ansprüche, **dadurch gekennzeichnet, dass** die Zusammensetzung Wasser in einer Gesamtmenge von 0 bis 70 Gew.-%, insbesondere von 10 bis 45 Gew.-%, jeweils bezogen auf das Gesamtgewicht der Zusammensetzung, enthält.

**11.** Verwendung einer Zusammensetzung nach einem der vorangehenden Ansprüche, **dadurch gekennzeichnet, dass** die Zusammensetzung eine Viskosität von 0,2 Pa*s bei einer Scherrate von 1000/s und 25 °C aufweist.

**12.** Verfahren zur vertikalen Verklebung zweier Fügeteile, wobei das Verfahren die nachfolgenden Schritte in der angegebenen Reihenfolge umfasst:

a) Aufbringen einer ersten Haftklebemasse eines doppelseitigen Klebebands auf ein erstes Fügeteil,
b) Entfernen der Trennschicht des doppelseitigen Klebebands von der zweiten Haftklebemasse des Klebebands,
c) Vollflächiges Aufbringen einer Zusammensetzung nach einem der Ansprüche 1 bis 11 auf die zweite Haftklebemasse des Klebebands,
d) Vertikales Fügen eines zweiten Fügeteils auf die mit der Zusammensetzung vollflächig benetzte zweite Haftklebemasse des Klebebands.

**13.** Kit-of-parts, umfassend

a) mindestens ein Fügeteil
b) mindestens ein Fügemittel, wobei das Fügemittel beidseitig mit einer Haftklebemasse ausgestattet ist

c) eine Zusammensetzung nach einem der Ansprüche 1 bis 11,

wobei das Fügeteil a) und das Fügemittel b) separat vorliegen oder wobei das Fügemittel b) einseitig auf das Fügeteil a) aufgebracht ist.

14. Kit-of-parts nach Anspruch 13, **dadurch gekennzeichnet, dass** mindestens ein weiteres Fügeteil enthalten ist.

## Claims

1. Use of a composition comprising

a) at least one alcohol and
b) at least one thickener

for reducing air inclusions in the vertical bonding of two adherends,
the composition having

- a viscosity of 1000 to 4000 Pa*s at a shear rate of 0.001/s and 25°C and
- a viscosity of 0.1 to 0.3 Pa*s at a shear rate of 1000/s and 25°C.

2. Use of a composition according to Claim 1, **characterized in that** the at least one alcohol a) is selected from linear or branched $C_1$-$C_{10}$ alcohols, preferably from ethanol, propan-1-ol and propan-2-ol, more particularly from a mixture of ethanol and propan-2-ol.

3. Use of a composition according to either of Claims 1 and 2, **characterized in that** the composition comprises the at least one alcohol a) in a total amount of 30 to 80 wt%, preferably of 40 to 75 wt%, more preferably of 45 to 70 wt%, more particularly of 50 to 60 wt%, based in each case on the total weight of the composition.

4. Use of a composition according to any of the preceding claims, **characterized in that** the composition comprises ethanol in a total amount of 40 wt% and propan-2-ol in a total amount of 19 to 20 wt%, based in each case on the total weight of the composition.

5. Use of a composition according to any of the preceding claims, **characterized in that** the thickener b) is selected from the group of (i) linear or crosslinked homopolymers of (meth)acrylic acid and (meth)acrylates, (ii) linear or crosslinked copolymers of (meth)acrylic acid and (meth)acrylates, (iii) poly(2-acrylamido-2-methylpropanesulphonic acid), (iv) poly(ammonium 2-acrylamido-2-methylpropanesulphonate), (v) cellulose gum, (vi) hydroxyethylcellulose and hydroxypropylcellulose, (vii) chitosan and also (viii) mixtures thereof, and more particularly is selected from crosslinked copolymers of (meth) acrylic acid and $C_{10}$ to $C_{30}$ (meth) alkyl acrylates.

6. Use of a composition according to any of the preceding claims, **characterized in that** the composition further comprises at least one neutralizing agent c), selected from the group of (i) inorganic bases, more particularly sodium hydroxide and potassium hydroxide, (ii) monoamines, more particularly triethanolamine, aminopropylmethane, diisopropanolamine, triisopropanolamine and 2-amino-2-(hydroxymethyl)-1,3-propanediol, (iii) diamines, more particularly tetrahydroxypropylethylenediamine, (iv) ethoxylated amines, more particularly ethoxylated cocosamine having 15 EO units per molecule of cocosamine, and also (v) mixtures thereof.

7. Use of a composition according to any of Claims 1 to 5, **characterized in that** the composition further comprises at least one co-thickener d), the co-thickener d) being selected from amine oxides of the general formula (I)

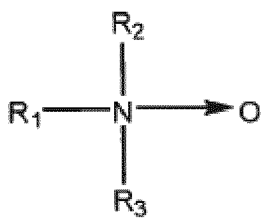

(I)

in which
$R_1$ to $R_3$, in each case independently of one another, are an aliphatic alkyl, isoalkyl or alkylene radical, an alicyclic tertiary alkyl or amidoalkyl radical having in each case 1 to 22 carbon atoms, or an oxalkyl group of the formula $-(C_nH_{2n}O)_xH$ with n = 2 or 3 and x = 1 to 25.

8. Use of a composition according to Claim 7, **characterized in that** the composition comprises a weight ratio of the total amount of thickener b) to the total amount of co-thickener d) of 1:1 to 1:3.

9. Use of a composition according to any of the preceding claims, **characterized in that** the composition comprises the thickener b) and optionally the co-thickener d) in a total amount of 0.5 to 5 wt%, more particularly of 0.5 to 2.5 wt%, based in each case on the total weight of the composition.

10. Use of a composition according to any of the preceding claims, **characterized in that** the composition comprises water in a total amount of 0 to 70 wt%, more particularly of 10 to 45 wt%, based in each case on the total weight of the composition.

11. Use of a composition according to any of the preceding claims, **characterized in that** the composition has a viscosity of 0.2 Pa*s at a shear rate of 1000/s and 25°C.

12. Method for the vertical bonding of two adherends, the method comprising the following steps in the specified order:

a) applying a first pressure-sensitive adhesive of the double-sided adhesive tape to a first adherend,
b) removing the release layer of the double-sided adhesive tape from the second pressure-sensitive adhesive of the adhesive tape,
c) applying a composition according to any of Claims 1 to 11 to the full area of the second pressure-sensitive adhesive of the adhesive tape,
d) vertically joining a second adherend to the second pressure-sensitive adhesive of the adhesive tape, wetted over its full area with the composition.

13. Kit of parts comprising

a) at least one adherend,
b) at least one joining means, the joining means being furnished on both sides with a pressure-sensitive adhesive,
c) a composition according to any of Claims 1 to 11,

where the adherend a) and the joining means b) are present separately or where the joining means b) is applied on one side of the adherend a).

14. Kit of parts according to Claim 13, **characterized in that** at least one further adherend is included.

**Revendications**

1. Utilisation d'une composition, contenant

a) au moins un alcool et
b) au moins un agent épaississant,

pour la réduction d'inclusions d'air dans l'adhésion verticale de deux éléments d'assemblage, la composition présentant

- une viscosité de 1000 à 4000 Pa*s à une vitesse de cisaillement de 0,001/s et 25°C et
- une viscosité de 0,1 à 0,3 Pa*s à une vitesse de cisaillement de 1000/s et 25°C.

2. Utilisation d'une composition selon la revendication 1, **caractérisée en ce que** l'au moins un alcool a) est choisi parmi des alcools linéaires et ramifiés en $C_{1-10}$, préférablement l'éthanol, le propan-1-ol et le propan-2-ol, en particulier parmi un mélange d'éthanol et de propan-2-ol.

3. Utilisation d'une composition selon l'une quelconque des revendications 1 et 2, **caractérisée en ce que** la composition contient l'au moins un alcool a) en une quantité totale de 30 à 80% en poids, de préférence 40 à 75% en poids, préférablement de 45 à 70% en poids, en particulier de 50 à 60% en poids, à chaque fois par rapport au poids total de la composition.

4. Utilisation d'une composition selon l'une quelconque des revendications précédentes, **caractérisée en ce que** la composition contient de l'éthanol en une quantité totale de 40% en poids et du propan-2-ol en une quantité totale de 19 à 20 % en poids, à chaque fois par rapport au poids total de la composition.

5. Utilisation d'une composition selon l'une quelconque des revendications précédentes, **caractérisée en ce que** l'agent épaississant b) est choisi dans le groupe (i) des homopolymères linéaires ou réticulés d'acide (méth)acrylique et de (méth)acrylates, (ii) des copolymères linéaires ou réticulés d'acide (méth)acrylique et de (méth)acrylates, (iii) d'un acide poly(2-acrylamido-2-méthylpropanesulfonique), (iv) d'un poly(2-acrylamido-2-méthylpropanesulfonate d'ammonium), (v) d'une gomme de cellulose, (vi) d'une hydroxyéthylcellulose et d'une hydroxypropylcellulose, (vii) d'un chitosane ainsi que (viii) de leurs mélanges, en particulier est choisi parmi des copolymères réticulés d'acide (méth)acrylique et de (méth)alkylacrylates en $C_{10-30}$.

6. Utilisation d'une composition selon l'une quelconque des revendications précédentes, **caractérisée en ce que** la composition contient de plus au moins un agent de neutralisation c), choisi dans le groupe (i) des bases inorganiques, en particulier l'hydroxyde de sodium et l'hydroxyde de potassium, (ii) des monoamines, en particulier la triéthanolamine, l'aminopropylméthane, la diisopropanolamine, la triisopropanolamine et le 2-amino-2-(hydroxyméthyl)-1,3-propanediol, (iii) des diamines, en particulier la tétrahydroxypropyléthylènediamine, (iv) des amines éthoxylées, en particulier la cocosamine éthoxylée comportant 15 motifs EO par molécule de cocosamine, ainsi que (v) leurs mélanges.

7. Utilisation d'une composition selon l'une quelconque des revendications 1 à 5, **caractérisée en ce que** la composition contient de plus au moins un co-agent épaississant d), le co-agent épaississant d) étant choisi parmi des oxydes d'amine de formule générale (I)

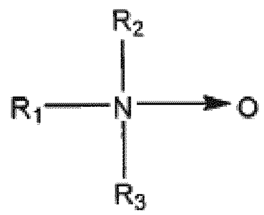

(I)

dans laquelle
$R_1$ à $R_3$, à chaque fois indépendamment l'un de l'autre, représentent un radical aliphatique alkyle, isoalkyle ou alkylène, un radical alicyclique tertiaire alkyle ou amidoalkyle comportant à chaque fois 1 à 22 atomes de carbone ou un groupe oxyalkyle de formule $-(C_nH_{2n}O)_xH$ avec n = 2 ou 3 et x = 1 à 25.

8. Utilisation d'une composition selon la revendication 7, **caractérisée** ce que la composition contient un rapport pondéral de la quantité totale d'agent épaississant b) sur la quantité totale de co-agent épaississant d) de 1 : 1 à 1 : 3.

9. Utilisation d'une composition selon l'une quelconque des revendications précédentes, **caractérisée en ce que** la composition contient l'agent épaississant b) et éventuellement le co-agent épaississant d) en une quantité totale de 0,5 à 5% en poids, en particulier de 0,5 à 2,5% en poids, à chaque fois par rapport au poids total de la composition.

10. Utilisation d'une composition selon l'une quelconque des revendications précédentes, **caractérisée en ce que** la composition contient de l'eau en une quantité totale de 0 à 70% en poids, en particulier de 10 à 45% en poids, à chaque fois par rapport au poids total de la composition.

11. Utilisation d'une composition selon l'une quelconque des revendications précédentes, **caractérisée en ce que** la composition présente une viscosité de 0,2 Pa*s à une vitesse de cisaillement de 1000/s et 25°C.

12. Procédé pour l'adhésion verticale de deux éléments d'assemblage, le procédé comprenant les étapes suivantes

dans l'ordre indiqué :

a) application d'une première masse autoadhésive d'un ruban adhésif double face sur un premier élément d'assemblage,
b) élimination de la couche de séparation du ruban adhésif double face de la deuxième masse autoadhésive du ruban adhésif,
c) application, sur toute la surface, d'une composition selon l'une quelconque des revendications 1 à 11 sur la deuxième masse autoadhésive du ruban adhésif,
d) assemblage vertical d'un deuxième élément d'assemblage sur la deuxième masse autoadhésive du ruban adhésif mouillée sur toute la surface avec la composition.

**13.** Kit de pièces, comprenant

a) au moins un élément d'assemblage
b) au moins un moyen d'assemblage, le moyen d'assemblage étant pourvu d'une masse autoadhésive sur les deux faces
c) une composition selon l'une quelconque des revendications 1 à 11,

l'élément d'assemblage a) et le moyen d'assemblage b) étant présents de manière distincte ou le moyen d'assemblage b) étant appliqué sur une seule face sur l'élément d'assemblage a).

**14.** Kit de pièces selon la revendication 13, **caractérisé en ce qu'**au moins un élément d'assemblage supplémentaire est contenu.

Figur 1

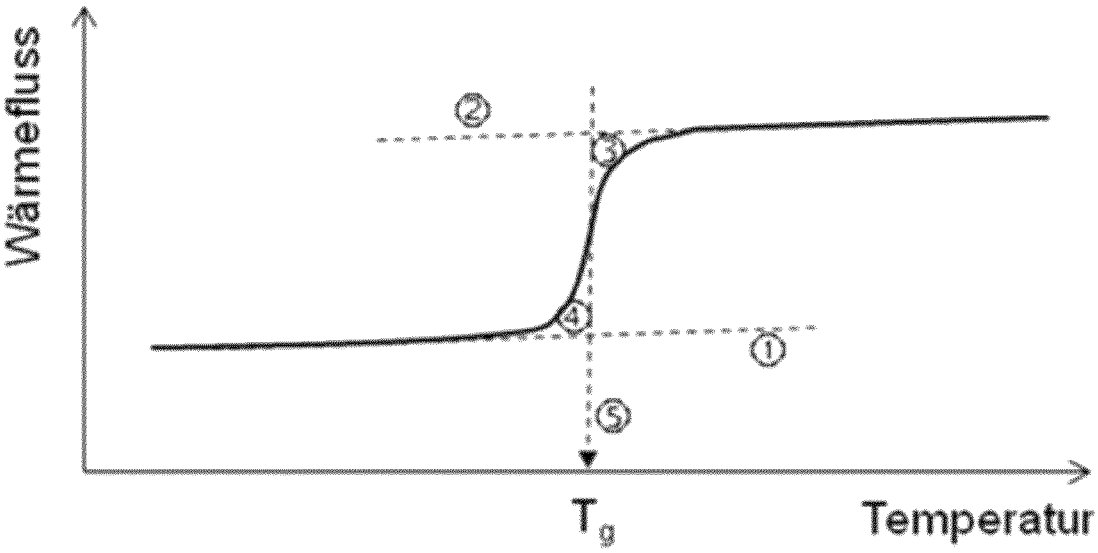

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 1978069 A1


### In der Beschreibung aufgeführte Nicht-Patentliteratur


- **VON DONATAS SATAS.** Handbook of Pressure Sensitive Adhesive Technology. Satas & Associates, Warwick, 1999
- **VON DONATAS SATAS.** *Handbook of Pressure Sensitive Adhesive Technology,* 1989
- **T.G. FOX.** *Bull. Am. Phys. Soc.,* 1956, vol. 1, 123